# EUROPEAN PATENT SPECIFICATION

(11) **EP 4 448 266 B1**
(45) Date of publication and mention of the grant of the patent: **03.12.2025**
(21) Application number: 22818683.9
(22) Date of filing: 17.11.2022
(51) Int. Cl.: B31B 50/59, B31F 1/00

(54) **A PRESSING MODULE FOR FORMING CELLULOSE PRODUCTS AND A METHOD FOR FORMING CELLULOSE PRODUCTS**
PRESSMODUL ZUR FORMUNG VON ZELLULOSEPRODUKTEN UND VERFAHREN ZUR FORMUNG VON ZELLULOSEPRODUKTEN
MODULE DE PRESSAGE POUR FORMER DES PRODUITS CELLULOSIQUES ET PROCÉDÉ DE FORMATION DE PRODUITS CELLULOSIQUES

(30) Priority: 16.12.2021 SE 2151541
(43) Date of publication of application: 23.10.2024
(73) Proprietor: PulPac AB, 421 31 Västra Frölunda (SE)
(72) Inventor: LITTEN, Neil Anthony, Reading, RG7 3AD (GB); MORDUE, Adrian, Alton, Hampshire, GU34 5BJ (GB); BERGFJORD, Mattias, 416 48 Göteborg (SE)
(74) Representative: Zacco Sweden AB
(86) International application number: PCT/EP2022/082345
(87) International publication number: WO 2023/110282

(56) References cited:
- WO-A1-2017/160218
- SE-A1- 1 950 299
- SE-B- 309 319
- US-A- 4 826 637

## Description

### TECHNICAL FIELD

The present disclosure relates to a pressing module for forming cellulose products from an air-formed cellulose blank structure. The pressing module comprises a forming mould with a first mould part and a second mould part configured for interacting with each other for forming the cellulose products from the air-formed cellulose blank structure in the forming mould. The first mould part and/or the second mould part are movably arranged relative to each other in a pressing direction parallel to a longitudinal direction of the pressing module. The disclosure further relates to a method for forming cellulose products from an air-formed cellulose blank structure in a pressing module.

### BACKGROUND

Cellulose fibres are commonly used as raw material for producing or manufacturing products. Products formed of cellulose fibres can be used in many different situations where there is a need for sustainable products. A wide range of products can be produced from cellulose fibres and a few examples are disposable plates and cups, cutlery, lids, bottle caps, coffee pods, blank structures, and packaging materials.

Forming mould systems are commonly used when manufacturing cellulose products from raw materials including cellulose fibres, and traditionally the cellulose products have been produced by wet-forming methods. A material commonly used for wet-forming cellulose fibre products is wet moulded pulp. Wet-formed products are generally formed by immersing a suction forming mould into a liquid or semi liquid pulp suspension or slurry comprising cellulose fibres, and when suction is applied, a body of pulp is formed with the shape of the desired product by fibre deposition onto the forming mould. With all wet-forming methods, there is a need for drying of the wet moulded product, where the drying process is a time and energy consuming part of the production. The demands on aesthetical, chemical and mechanical properties of cellulose products are increasing, and due to the properties of wet-formed cellulose products, the mechanical strength, flexibility, freedom in material thickness, and chemical properties are limited. It is also difficult in wet-forming processes to control the mechanical properties of the products with high precision.

One development in the field of producing cellulose products is dry-forming of cellulose products without using wet-forming methods. Instead of forming the cellulose products from a liquid or semi liquid pulp suspension or slurry, an air-formed cellulose blank structure is used. The air-formed cellulose blank structure is inserted into a forming mould and during the dry-forming of the cellulose products, the cellulose blank is subjected to a high forming pressure and a high forming temperature.

SE 309 319 B relates to a pressing module of the generic kind for dry manufacturing rigid cellulose products which pressing module comprises a forming mould with a first mould part and a second mould part configured for interacting with each other for forming the cellulose products in the forming mould.

SE 1 950 299 A1 and WO 2017/160218 A1 disclose a method and a pressing module for forming cellulose products from an air-formed cellulose blank structure, wherein the pressing module comprises a forming mould with a first mould part and a second mould part, wherein the first mould part and/or the second mould part are movably arranged relative to each other in a pressing direction parallel to a longitudinal direction of the pressing module, wherein the first mould part comprises an elastic deformation element arranged in connection to a base structure, which is movably arranged in the longitudinal direction, wherein the elastic deformation element is displaceable in a lateral direction perpendicular to the longitudinal direction of the pressing module through deformation.

One difficulty with dry-forming methods is the problem with forming specific parts or sections of the cellulose products having complex shapes, such as shapes with negative draft angles or undercut sections. These types of complex product shapes are commonly wet-formed and thereafter pressed in several forming steps in order to establish the desired product shape. This is a time and energy consuming method, and there is thus a need for a more efficient and simple method and system for dry-forming cellulose products with complex shapes from an air-formed cellulose blank structure.

### SUMMARY

An object of the present disclosure is to provide a pressing module for forming cellulose products from an air-formed cellulose blank structure and a method for forming cellulose products from an air-formed cellulose blank structure in a pressing module, where the previously mentioned problems are avoided. This object is at least partly achieved by the features of the independent claims. The dependent claims contain further developments of the pressing module and the method.

The disclosure concerns a pressing module for forming cellulose products from an air-formed cellulose blank structure. The pressing module comprises a forming mould with a first mould part and a second mould part configured for interacting with each other for forming the cellulose products from the air-formed cellulose blank structure in the forming mould. The first mould part and/or the second mould part are movably arranged relative to each other in a pressing direction parallel to a longitudinal direction of the pressing module, and the first mould part and the second mould part are at least partly configured for being arranged in an overlapping relationship in the longitudinal direction during forming of the cellulose products. The first mould part comprises a first mould part section and a second mould part section arranged in connection to the first mould part section. The second mould part section is configured for being displaced relative to the first mould part section in a lateral direction of the pressing module during forming of the cellulose products in the forming mould. The first mould part section and the second mould part section are configured for applying a forming pressure onto the air-formed cellulose blank structure in the range of 1-100 MPa, preferably in the range of 4-20 MPa, during a single pressing operation upon forming of the cellulose products in the forming mould.

Advantages with these features are that the pressing module is providing an efficient way to produce cellulose products with complex shapes, such as shapes with negative draft angles or undercut sections. The single pressing operation is used for a time and energy saving production of the cellulose products. With a single pressing operation is meant that the cellulose products are formed from the cellulose blank structure in one single pressing step in the forming mould. In the single pressing operation, the first mould part and the second mould part are interacting with each other for establishing the forming pressure and a forming temperature during a single operational engagement step.

According to an embodiment, the first mould part section and the second mould part section are in the overlapping relationship at least partly configured for being positioned in a longitudinally overlapping section between the first mould part and the second mould part. The overlapping relationship with the longitudinally overlapping section is used for establishing a forming cavity between the mould parts for the forming of the cellulose products from the cellulose blank structure.

According to an embodiment, the second mould part section is configured for being displaced relative to the first mould part section in the lateral direction, towards the second mould part from an initial position to a pressing position during forming of the cellulose products. In the initial position, the forming mould can receive the cellulose blank structure between the mould parts and the cellulose blank structure can be displaced into the forming mould. In the pressing position, the cellulose blank structure is formed in the forming mould and the forming pressure can be applied onto the cellulose blank structure by the second mould part section.

According to an embodiment, the second mould part section is configured for being displaced relative to the first mould part section in the lateral direction, away from the second mould part from the pressing position back to the initial position after forming of the cellulose products. With this configuration, the forming mould could be used again for another product forming cycle.

According to an embodiment, the second mould part section comprises a pressing surface configured for pressing the air-formed cellulose blank structure in the lateral direction towards the second mould part during forming of the cellulose products. The pressing surface is used for pressing one or more sections of the cellulose blank structure towards the second mould part in the lateral direction during forming of the cellulose products from the cellulose blank structure in the forming mould. The pressing surface could further be used for pressing one or more sections of the cellulose blank structure towards the second mould part in other suitable directions depending on the configuration of the pressing surface and the second mould part.

According to an embodiment, the second mould part comprises a forming structure configured for interacting with the pressing surface. The pressing surface is configured for pressing the air-formed cellulose blank structure in the lateral direction towards the forming structure during forming of the cellulose products. The forming structure is configured for interacting with the pressing surface, and the pressing surface is pressing the air-formed cellulose blank structure in the lateral direction towards the forming structure in the second mould part during forming of the cellulose products. The forming structure is arranged with a shape that is corresponding to a desired shape of a part or section of the cellulose products.

According to an embodiment, the forming structure is arranged as a recess in the second mould part and the pressing surface is configured for pressing the air-formed cellulose blank structure into the recess during forming of the cellulose products. The pressing surface and the recess are used for an efficient forming of the complex shape of the cellulose product. The pressing surface is pressing the air-formed cellulose blank structure into the recess during forming of the cellulose products. The recess could for example form an undercut section of the second mould part with a negative draft angle. The forming structure may extend along the second mould part as a single continuous recess, or a plurality of recesses may be arranged along the second mould part. In a further alternative, the forming structure may be arranged as a recess having a spiral shape that is forming a threaded structure in the cellulose product.

According to the invention the first mould part further comprises a base structure arranged in connection to the first mould part section and the second mould part section. The first mould part section and the base structure are movably arranged in the longitudinal direction relative to each other, and upon movement of the first mould part section and the base structure relative to each other, the second mould part section is configured for being displaced in the lateral direction. The relative movement between the first mould part section and the base structure could thus be used for displacing the second mould part section in the lateral direction, for an efficient forming process.

According to the invention the second mould part section is arranged as an elastic deformation element. During the forming of the cellulose products, the deformation element is deformed to exert the forming pressure on the cellulose blank structure in the forming mould. Through the deformation of the deformation element, an even pressure distribution is achieved even if the cellulose products are having complex three-dimensional shapes, such as shapes with a recessed undercut section having a negative draft angle, or if the cellulose blank structure is having a varied thickness. To exert a required forming pressure on the cellulose blank structure, the deformation element is made of a material that can be deformed when a force or pressure is applied, and the deformation element is made of an elastic material capable of recovering size and shape after deformation.

The second mould part section is thus be arranged as a deformable deformation element, i.e. a deformation element that is configured to elastically deform upon exertion of a compression force on the second mould part.

The compression force acting on the second mould part section may for example be generated by moving the base structure towards the first mould part section and thereby squeezing the second mould part section, which is located between the base structure and the first mould part section. The squeezing of the second mould part section results in that the second mould part section elastically deforms and becomes partly displaced in the lateral direction towards the second mould part, and thereby enabling compression forming of the air-formed cellulose blank structure.

According to an embodiment, the second mould part section is arranged as two or more elastic deformation elements.

The disclosure further concerns a method for forming cellulose products from an air-formed cellulose blank structure in a pressing module. The pressing module comprises a forming mould with a first mould part and a second mould part configured for interacting with each other for forming the cellulose products from the air-formed cellulose blank structure in the forming mould. The first mould part and/or the second mould part are movably arranged relative to each other in a pressing direction parallel to a longitudinal direction of the pressing module. The first mould part comprises a first mould part section and a second mould part section arranged in connection to the first mould part section. In a single pressing operation, the method comprises the steps: providing the air-formed cellulose blank structure and arranging the air-formed cellulose blank structure between the first mould part and the second mould part; displacing the first mould part and/or the second mould part into an at least partly overlapping relationship in the longitudinal direction, where in the overlapping relationship the first mould part section and the second mould part section are at least partly positioned in a longitudinally overlapping section between the first mould part and the second mould part; and applying a forming pressure by the first mould part section and the second mould part section onto the air-formed cellulose blank structure in the range of 1-100 MPa, preferably in the range of 4-20 MPa, for forming the cellulose products in the forming mould.

Advantages with these features are that the method is providing an efficient way to produce cellulose products with complex shapes or where specific parts or sections of the cellulose products are having complex shapes, such as shapes with negative draft angles or undercut sections. The single pressing operation is used for a time and energy saving production of the cellulose products. With a single pressing operation is meant that the cellulose products are formed from the cellulose blank structure in one single pressing step in the forming mould. In the single pressing operation, the first mould part and the second mould part are interacting with each other for establishing the forming pressure and a forming temperature during a single operational engagement step. The overlapping relationship is used for establishing a forming cavity between the mould parts for the forming of the cellulose products from the cellulose blank structure.

According to an embodiment, the method further comprises the step: applying a forming temperature onto the air-formed cellulose blank structure when the first mould part and the second mould part are displaced into the at least partly overlapping relationship in the longitudinal direction, wherein the forming temperature is in the range of 100-300 °C, preferably in the range of 100-200 °C. The forming temperature is used together with the forming pressure for an efficient forming of the cellulose blank structure in the single pressing operation.

According to an embodiment, the method further comprises the step: establishing the forming pressure onto the air-formed cellulose blank structure between the first mould part section and the second mould part and between the second mould part section and the second mould part. With this step, at least the first mould part section and the second mould part section are used for exerting the forming pressure onto the cellulose blank structure during the forming of the cellulose products, for an efficient forming of products having complex shapes.

According to an embodiment, the method further comprises the step: displacing the second mould part section relative to the first mould part section in the lateral direction, towards the second mould part from an initial position to a pressing position during forming of the cellulose products.

According to an embodiment, the method further comprises the step: displacing the second mould part section relative to the first mould part section in the lateral direction, away from the second mould part from the pressing position back to the initial position after forming of the cellulose products.

According to an embodiment, the second mould part section comprises a pressing surface. The method further comprises the step: pressing the air-formed cellulose blank structure by the pressing surface in the lateral direction towards the second mould part during forming of the cellulose products. The pressing surface is pressing one or more sections of the cellulose blank structure towards the second mould part in the lateral direction during forming of the cellulose products from the cellulose blank structure in the forming mould. The pressing surface could further be pressing one or more sections of the cellulose blank structure towards the second mould part in other suitable directions depending on the configuration of the pressing surface and the second mould part.

According to an embodiment, the second mould part comprises a forming structure configured for interacting with the pressing surface. The method further comprises the step: pressing the air-formed cellulose blank structure by the pressing surface in the lateral direction towards the forming structure during forming of the cellulose products. The forming structure is interacting with the pressing surface during forming of the cellulose products, and the pressing surface is pressing the air-formed cellulose blank structure in the lateral direction towards the forming structure in the second mould part. The forming structure is arranged with a shape that is corresponding to a desired shape of a part or section of the cellulose products.

According to an embodiment, the forming structure is arranged as a recess in the second mould part. The method further comprises the step: pressing the air-formed cellulose blank structure by the pressing surface into the recess during forming of the cellulose products. The pressing surface and the recess are used for an efficient forming of the complex shape of the cellulose product. The recess could for example form an undercut section of the second mould part with a negative draft angle. The forming structure may extend along the second mould part as a single continuous recess, or a plurality of recesses may be arranged along the second mould part. In a further alternative, the forming structure may be arranged as a recess having a spiral shape that is forming a threaded structure in the cellulose product.

According to an embodiment, the first mould part further comprises a base structure arranged in connection to the first mould part section and the second mould part section. The first mould part section and the base structure are movably arranged in the longitudinal direction relative to each other. The method further comprises the steps: displacing the first mould part section and the base structure relative to each other in the longitudinal direction, and displacing the second mould part section in the lateral direction upon movement of the first mould part section and the base structure relative to each other. The relative movement between the first mould part section and the base structure could thus be used for displacing the second mould part section in the lateral direction, for an efficient forming process.

According to the invention, the second mould part section is arranged as a deformation element. The method further comprises the step: displacing the second mould part section relative to the first mould part section in the lateral direction through deformation of the deformation element. During the forming of the cellulose products, the deformation element is deformed to efficiently exert the forming pressure on the cellulose blank structure in the forming mould. Through the deformation of the deformation element, an even pressure distribution is achieved even if the cellulose products are having complex three-dimensional shapes, such as shapes with recessed undercut section having a negative draft angle, or if the cellulose blank structure is having a varied thickness.

According to an embodiment, the second mould part section is arranged as two or more elastic deformation elements. The method further comprises the step: displacing the two or more elastic deformation elements relative to the first mould part section in the lateral direction.

### BRIEF DESCRIPTION OF DRAWINGS

The disclosure will be described in detail in the following, with reference to the attached drawings, in which
- Fig. 1a-c: show schematically, in side views, a pressing module with a forming mould according to an embodiment,
- Fig. 2a-c: show schematically, in cross sectional side views, the forming mould according to an embodiment,
- Fig. 3a-c: show schematically, in cross sectional side views, the forming mould according to an alternative embodiment,
- Fig. 4a-c: show schematically, in cross sectional side views, the forming mould according to an alternative embodiment, and
- Fig. 5: shows schematically, in a cross sectional side view, the forming mould according to an alternative embodiment.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

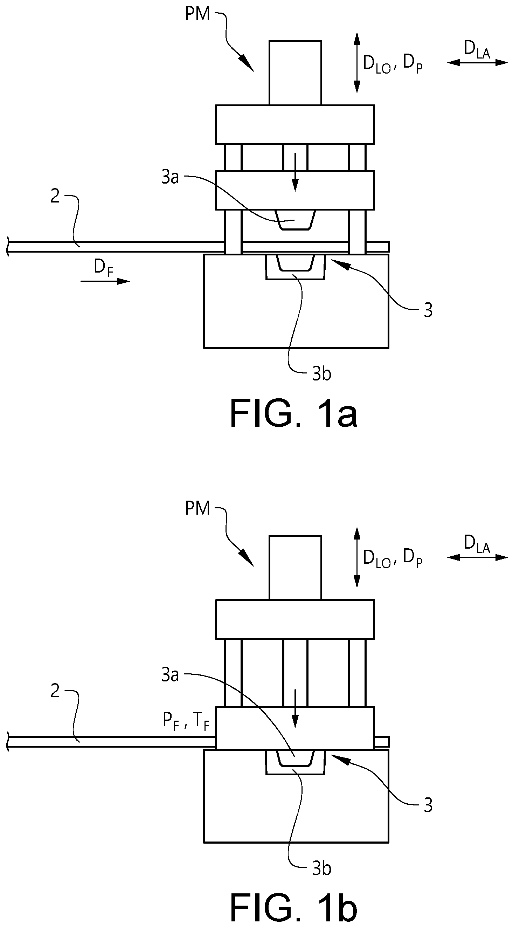

Figures 1a-c schematically show a pressing module PM for dry-forming cellulose products 1 from an air-formed cellulose blank structure 2. The pressing module PM comprises a forming mould 3 with a first mould part 3a and a second mould part 3b configured for interacting with each other for forming the cellulose products 1 from the air-formed cellulose blank structure 2 in the forming mould 3. The first mould part 3a and/or the second mould part 3b are movably arranged relative to each other in a pressing direction D_{P} parallel to a longitudinal direction D_{LO} of the pressing module PM.

The cellulose products 1 are dry-formed from the air-formed cellulose blank structure 2 in the pressing module PM. With an air-formed cellulose blank structure 2 is meant an essentially air-formed fibrous web structure produced from cellulose fibres. The cellulose fibres may originate from a suitable cellulose raw material, such as a pulp material. Suitable pulp materials are for example fluff pulp, paper structures, or other cellulose fibre containing structures. The cellulose fibres may also be extracted from agricultural waste materials, for example wheat straws, fruit and vegetable peels, bagasse, etc. With air-forming of the cellulose blank structure 2 is meant the formation of a cellulose blank structure in a dry forming process in which the cellulose fibres are air-formed to produce the cellulose blank structure 2. When forming the cellulose blank structure 2 in the air-forming process, the cellulose fibres are carried and formed to the fibre blank structure 2 by air as carrying medium. This is different from a normal papermaking process or a traditional wet-forming process, where water is used as carrying medium for the cellulose fibres when forming the paper or fibre structure. In the air-forming process, small amounts of water or other substances may if desired be added to the cellulose fibres in order to change the properties of the cellulose products, but air is still used as carrying medium in the forming process. The cellulose blank structure 2 may, if suitable have a dryness that is mainly corresponding to the ambient humidity in the atmosphere surrounding the air-formed cellulose blank structure 2. As an alternative, the dryness of the cellulose blank structure 2 can be controlled in order to have a suitable dryness level when forming the cellulose products 1.

The air-formed cellulose blank structure 2 may be formed of cellulose fibres in a conventional air-forming process or in a cellulose blank air-forming module. For example, the cellulose blank structure 2 may have a composition where the fibres are of the same origin or alternatively contain a mix of two or more types of cellulose fibres, depending on the desired properties of the cellulose products 1. The cellulose fibres used in the cellulose blank structure 2 are during the forming process of the cellulose products 1 strongly bonded to each other with hydrogen bonds, due to applied forming pressure and forming temperature together with adequate moist content in the cellulose blank structure 2. The cellulose fibres may be mixed with other substances or compounds to a certain amount as will be further described below. With cellulose fibres is meant any type of cellulose fibres, such as natural cellulose fibres or manufactured cellulose fibres. The cellulose blank structure 2 may specifically comprise at least 95% cellulose fibres, or more specifically at least 99% cellulose fibres.

The air-formed cellulose blank structure 2 may have a single-layer or a multi-layer configuration. A cellulose blank structure 2 having a single-layer configuration is referring to a structure that is formed of one layer containing cellulose fibres. A cellulose blank structure 2 having a multi-layer configuration is referring to a structure that is formed of two or more layers comprising cellulose fibres, where the layers may have the same or different compositions or configurations.

The cellulose blank structure 2 may comprise one or more additional cellulose layers comprising cellulose fibres, where an additional cellulose layer for example is arranged as a carrying layer for one or more other layers of the cellulose blank structure 2. The one or more additional cellulose layers may act as reinforcement layers having a higher tensile strength than other layers of the cellulose blank structure 2. This is useful when one or more air-formed layers of the cellulose blank structure 2 have compositions with low tensile strength in order to avoid that the cellulose blank structure 2 will break during the forming of the cellulose products 1. The one or more additional cellulose layers with higher tensile strength act in this way as a supporting structure for other layers of the cellulose blank structure 2. The one or more additional cellulose layers may be of a different composition than the rest of the cellulose blank structure 2, such as for example a tissue layer containing cellulose fibres, an airlaid structure comprising cellulose fibres, or other suitable layer structures. It is thus not necessary that the one or more additional cellulose layers are air-formed. Other suitable additional layers may also be used such as for example silicone coated structures or bio-based films.

The one or more air-formed layers of the cellulose blank structure 2 are fluffy and airy structures, where the cellulose fibres forming the structures are arranged relatively loosely in relation to each other. The fluffy cellulose blank structures 2 are used for an efficient dry-forming of the cellulose products 1, allowing the cellulose fibres to form the cellulose products 1 in an efficient way during the dry-forming process in the pressing module PM.

Figures 1a-c schematically show an example embodiment of the pressing module PM for dry-forming cellulose products 1 from the cellulose blank structure 2. To form the cellulose products 1 from the air-formed cellulose blank structure 2 in the pressing module PM, the cellulose blank structure 2 is first provided from a suitable source. The cellulose blank structure 2 may be air-formed from cellulose fibres and arranged on rolls or in stacks. The rolls or stacks may thereafter be arranged in connection to the pressing module PM. As an alternative, the cellulose blank structure 2 may be air-formed from cellulose fibres in a cellulose blank air-forming module arranged in connection to the pressing module PM, and directly fed to the pressing module PM after the air-forming operation. The cellulose blank structure 2 is fed to the pressing module PM with suitable non-illustrated transportation means, such as forming wires, vacuum belt feeders, or conveyor belts.

The pressing module PM comprises one or more forming moulds 3, and the one or more forming moulds 3 are configured for dry-forming the cellulose products 1 from the cellulose blank structure 2. The pressing module PM may be arranged with only one forming mould 3 in a single-cavity configuration, or alternatively with two or more forming moulds in a multi-cavity configuration. A single-cavity configuration pressing module thus comprises only one forming mould 3 with a first mould part 3a and a cooperating second mould part 3b. A multi-cavity configuration pressing module comprises two or more forming moulds 3, each having cooperating first mould parts 3a and second mould parts 3b.

In the embodiment illustrated in figures 1a-c, the pressing module PM is arranged as a single-cavity configuration pressing module comprising one forming mould 3 with a first mould part 3a and a second mould part 3b movably arranged relative to each other. In the following, the pressing module PM will be described in connection to a single-cavity configuration pressing module, but the disclosure is equally applicable on a multi-cavity configuration pressing module.

The pressing module PM can for example be constructed so that the first mould part 3a or the second mould part 3b is movable and arranged to move towards the other mould part during the dry-forming process, where the other mould part is stationary or non-movably arranged. In the embodiment illustrated in figures 1a-c, the first mould part 3a is movably arranged and the second mould part 3b is stationary. In an alternative non-illustrated embodiment, both the first mould part 3a and the second mould part 3b are movably arranged, where the first mould part 3a and the second mould part 3b are displaced in directions towards each other during the dry-forming process. The moving mould parts may be displaced with a suitable actuator, such as a hydraulic, pneumatic, or electric actuator. A combination of different actuators may also be used. The relative speed between the first mould part 3a and the second mould part 3b during the dry-forming process is suitably chosen so that the cellulose blank structure 2 is evenly distributed in the forming mould 3 during the dry-forming process.

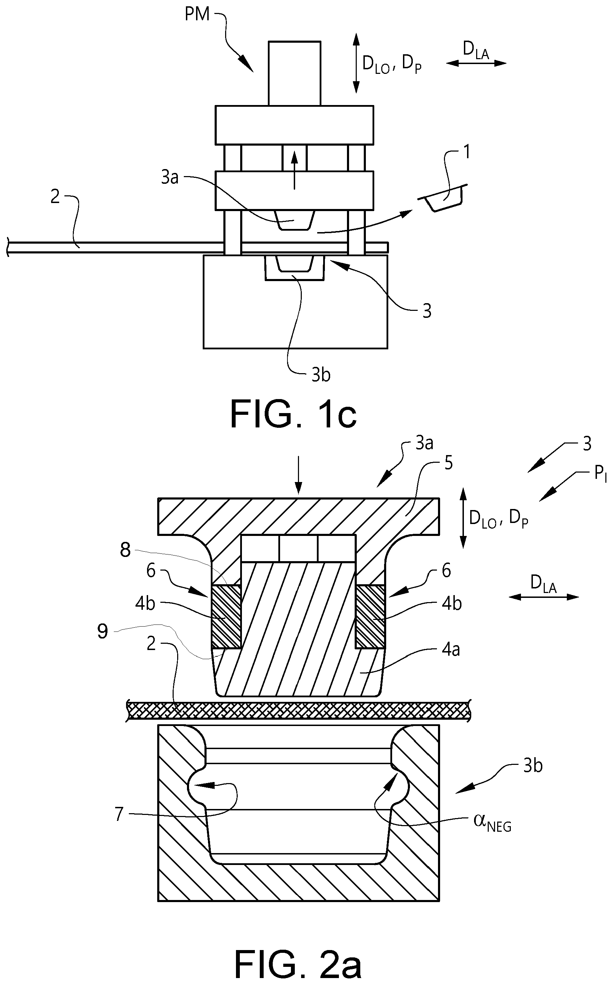

As indicated in figures 1a-c, the first mould part 3a is movably arranged in relation to the second mould part 3b in the pressing direction D_{P} and the first mould part 3a is further arranged to be pressed towards the second mould part 3b in the pressing direction D_{P} during dry-forming of the cellulose products 1 for establishing a forming pressure P_{F} onto the cellulose blank structure 2. When dry-forming the cellulose products 1, the cellulose blank structure 2 is arranged between the first mould part 3a and the second mould part 3b when the forming mould 3 is in an open state, as shown in figure 1a. When the cellulose blank structure 2 has been arranged in the forming mould 3, the first mould part 3a is moved towards the second mould part 3b during the dry-forming process. When the forming pressure P_{F} together with a suitable forming temperature T_{F} are established in the forming mould 3 onto the cellulose blank structure 2, the movement of the first mould part 3a is stopped in a product forming position, as shown in figure 1b. The first mould part 3a is thereafter moved in a direction away from the second mould part 3b after a certain time duration or directly after the first mould part 3a has been stopped, as shown in figure 1c. A suitable control system may be used for controlling the operation of the pressing module PM and the forming mould 3.

The cellulose products 1 are dry-formed from the cellulose blank structure 2 in the forming mould 3 by applying the forming pressure P_{F} and a forming temperature T_{F} onto the air-formed cellulose blank structure 2. The cellulose blank structure 2 is heated to a forming temperature T_{F} in the range of 100-300 °C, preferably in the range of 100-200 °C, and pressed with a forming pressure P_{F} in the range of 1-100 MPa, preferably in the range of 4-20 MPa. The first mould part 3a is arranged for forming the cellulose products 1 through interaction with the corresponding second mould part 3b. During dry-forming of the cellulose products 1, the cellulose blank structure 2 is arranged in the forming mould 3, between the first mould part 3a and the second mould part 3b, and exerted to the forming pressure P_{F} in the range of 1-100 MPa, preferably in the range of 4-20 MPa, and the forming temperature T_{F} in the range of 100-300°C, preferably in the range of 100-200 °C. When dry-forming the cellulose products 1, hydrogen bonds are formed between the cellulose fibres in the cellulose blank structure 2 arranged between the first mould part 3a and the second mould part 3b, due to the applied forming pressure P_{F} and forming temperature T_{F} together with adequate moist content in the cellulose blank structure 2. The temperature and pressure levels are for example measured in the cellulose blank structure 2 during the dry-forming process with suitable sensors arranged in or in connection to the cellulose fibres in the cellulose blank structure 2. The cellulose blank structure 2 is typically containing less than 45 weight percent water when formed in the forming mould 3.

A cellulose product forming cycle is schematically illustrated in figures 1a-c. The cellulose blank structure 2 is, as indicated in figure 1a, transported to the forming mould 3 in a feeding direction D_{F} with a suitable transportation speed. The cellulose blank structure 2 is suitably fed intermittently to the forming mould 3. In order to form the cellulose products 1, the cellulose blank structure 2 is arranged between the first mould part 3a and the second mould part 3b, as shown in figure 1a. Upon forming of the cellulose products 1, the first mould part 3a is moved towards the second mould part 3b, and in the illustrated embodiment, the cellulose blank structure 2 is pushed by the first mould part 3a into the second mould part 3b. When the first mould part 3a is pushed towards the second mould part 3b with the cellulose blank structure 2 positioned between the mould parts, the forming pressure P_{F} is established onto the cellulose blank structure 2 by the pushing force applied by the first mould part 3a. The interaction between the first mould part 3a and the second mould part 3b is thus establishing the forming pressure P_{F} in the forming mould 3. The applied force is during the forming process establishing the forming pressure P_{F} onto the cellulose blank structure 2, as shown in figure 1b, which together with the forming temperature T_{F} applied onto the cellulose blank structure 2 is dry-forming the cellulose products 1. The forming mould 3 suitably comprises a heating unit that is establishing the forming temperature T_{F} in the cellulose blank structure 2. The heating unit may have any suitable configuration, and as an example a heated mould part or heated mould parts may be used for establishing the forming temperature T_{F}. The heating unit may be integrated in or cast into the first mould part 3a and/or the second mould part 3b, and suitable heating devices are e.g. electrical heaters, such as a resistor element, or fluid heaters. Other suitable heat sources may also be used. When the cellulose products have been dry-formed in the forming mould 3, the first mould part 3a is moved away from the second mould part 3b, as shown in figure 1c, and the formed cellulose product 1 can be removed from the forming mould 3 with a suitable removal device. After removal of the cellulose product 1, the cellulose product forming cycle is repeated.

The cellulose blank structure 2 may be arranged into the forming mould 3 in any suitable way, and as an example, the cellulose blank structure 2 may be fed with a suitable feeding device, which is transporting the cellulose blank structure 2 to the forming mould 3 in the feeding direction D_{F}. The feeding device could for example be a conveyor belt, a forming wire unit, an industrial robot, or any other suitable manufacturing equipment. The transportation speed may differ depending on the types of cellulose products 1 produced, and is chosen to match the forming speed in the forming mould 3.

An embodiment of the forming mould 3 is illustrated more in detail in figures 2a-c. In this embodiment, the first mould part 3a is arranged as a positive mould part, and the second mould part 3b is arranged as a negative mould part. The first mould part 3a is movably arranged and the second mould part 3b is stationary. The first mould part 3a comprises a first mould part section 4a and a second mould part section 4b. The second mould part section 4b is arranged in connection to the first mould part section 4a. The second mould part section 4b is configured for being displaced relative to the first mould part section 4a in a lateral direction D_{LA} of the pressing module PM during forming of the cellulose products 1 in the forming mould 3. The lateral direction D_{LA} is a direction perpendicular to, or essentially perpendicular to, the pressing direction D_{P} and the longitudinal direction D_{LO} of the pressing module PM. The second mould part section 4b can in this way be used for forming specific parts or sections of the cellulose products 1, such as for example structural areas of the cellulose products 1 having a negative draft angle or undercut sections, and the forming mould 3 could be designed with negative draft angles or undercut areas.

The first mould part 3a further comprises a base structure 5 arranged in connection to the first mould part section 4a and the second mould part section 4b. The first mould part section 4a and the base structure 5 are movably arranged relative to each other in the pressing direction D_{P}. Upon movement of the first mould part section 4a relative to the base structure 5, the second mould part section 4b is displaced in the lateral direction D_{LA}, as understood from figures 2a-c.

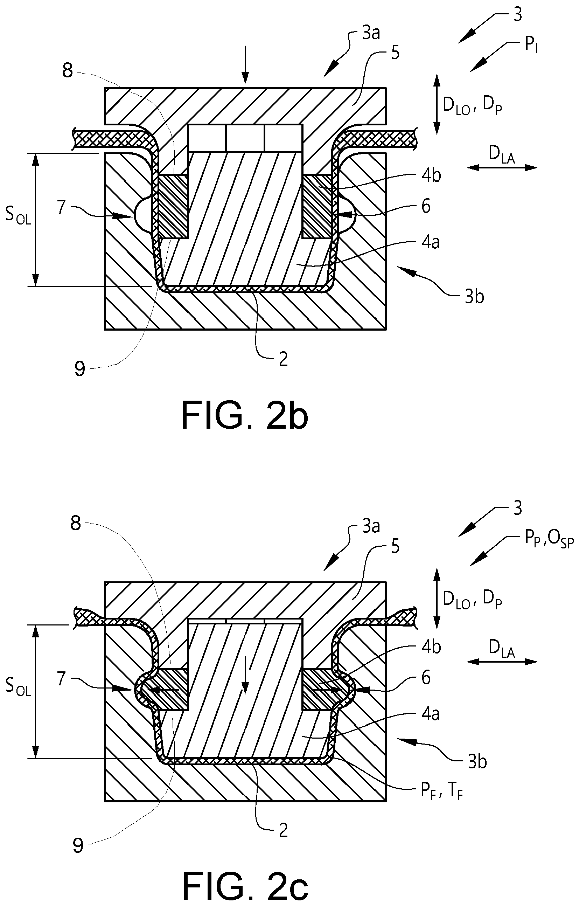

The second mould part section 4b is in this embodiment arranged as a deformation element. The second mould part section 4b formed by the deformation element comprises a pressing surface 6 configured for pressing the air-formed cellulose blank structure 2 in the lateral direction D_{LA} towards the second mould part 3b during forming of the cellulose products 1, as illustrated in figure 2c. The second mould part 3b comprises a forming structure 7 configured for interacting with the pressing surface 6, and in this way the pressing surface 6 is pressing the air-formed cellulose blank structure 2 in the lateral direction D_{LA} towards the forming structure 7 during forming of the cellulose products 1. The forming structure 7 is arranged as a recess in the second mould part 3b, and the pressing surface 6 is pressing the air-formed cellulose blank structure 2 into the recess during forming of the cellulose products 1. The recess is with this configuration forming an undercut section of the second mould part with a negative draft angle α_{NEG}, as shown in figure 2c. The forming structure 7 may extend along the second mould part 3b as a single continuous recess. In an alternative non-illustrated embodiment, the forming structure 7 is arranged as a plurality of recesses arranged along the second mould part 3b. In a further alternative non-illustrated embodiment, the forming structure 7 is arranged as recess having a spiral shape that is forming a threaded structure in the cellulose product 1 during forming. It should be understood that in alternative embodiments, the second mould part section 4b could be arranged as two or more deformation elements.

The second mould part section 4b is typically arranged as a deformable deformation element. In other words, the second mould part section 4b is configured to deform, in particular elastically deform, upon applying a compression force on the second mould part 4b in the longitudinal direction D_{LO} by means of movement of the first mould part section 4a relative to the base structure 5 in the longitudinal direction D_{LO}.

The deformation element forming the second mould part section 4b in the embodiment illustrated in figures 2a-c has a ring-like shape or configuration, and the deformation element is arranged between the first mould part section 4a and the base structure 5. The deformation element may be arranged as a single structural part or alternatively two or more structural parts. The deformation element is configured for exerting the forming pressure P_{F} on the cellulose blank structure 2 during dry-forming of the cellulose products 1. The deformation element may be attached with suitable attachment means to the first mould part section 4a and the base structure 5, such as for example glue or mechanical fastening members. Alternatively, the deformation element is positioned between the first mould part section 4a and the base structure 5 without any attachment means and instead held in position through the configuration of the first mould part section 4a and the base structure 5, as understood from the figures.

The deformation element forming the second mould part section 4b is arranged between a base structure surface 8 of the base structure 5 and a first mould part section surface 9 of the first mould part section 4a. The base structure surface 8 and first mould part section surface 9 have an essentially horizontal extension, i.e. the surfaces 8, 9 are extending essentially perpendicular to the longitudinal direction D_{LO}. Having the deformation element arranged between essentially horizontal surfaces 8, 9 enables a compact shape of the deformation element, and thus a larger ratio of metal surface of the first mould part 3a being available for press forming of the cellulose blank structure 2. As a result, a greater part of the cellulose blank structure 2 may be press formed between two metal surfaces of the first and second mould parts 3a, 3b. This is generally desirable because press forming of a cellulose blank structure 2 between two metal surfaces typically results in a better surface quality of the finished product, compared with press forming between an elastic element and a metal surface. Consequently, the technical effect of the deformation element arranged between essentially horizontal surfaces 8, 9 is a cellulose product 1 with a greater degree of high quality surface finish, while at the same time using an elastic deformation element to form complex shapes.

With an elastic deformation element, there is thus no need for a base structure surface 8 and a first mould part section surface 9 that are inclined, curved or having other complex shapes to provide lateral movement of the deformation element. Instead, the material characteristics of the deformation element itself ensures that the deformation element deforms in a desired way during pressing.

In some example embodiments, a certain degree of inclination of one or both of the base structure surface 8 and a first mould part section surface 9 can be implemented depending on the circumstances.

For example, in one example embodiment, a first inclination angle (not shown) of the base structure surface 8 and a second inclination angle (not shown) of the first mould part section surface 9 is between + 10° and - 10° relative a plane extending perpendicular to the longitudinal direction D_{LO}.

During the forming of the cellulose products 1, the deformation element is deformed to exert the forming pressure P_{F} on the cellulose blank structure 2 in the forming mould 3, and through deformation of the deformation element, an even pressure distribution is achieved even if the cellulose products are having complex three-dimensional shapes, such as the shape established by the forming structure 7 with a recessed undercut section having a negative draft angle α_{NEG}, or if the cellulose blank structure 2 is having a varied thickness. To exert a required forming pressure P_{F} on the cellulose blank structure 2, the deformation element is made of a material that can be deformed when a force or pressure is applied, and the deformation element is suitably made of an elastic material capable of recovering size and shape after deformation. The deformation element may further be made of a material with suitable properties that is withstanding the high forming pressure P_{F} and forming temperature T_{F} levels used in the forming mould 3 when forming the cellulose products 1. Certain elastic or deformable materials have fluid-like properties when being exposed to high pressure levels. If the deformation element is made of such a material, an even pressure distribution can be achieved in the forming process, where the pressure exerted onto the cellulose blank structure 2 from the deformation element is equal or essentially equal in all directions. When the deformation element under pressure is in its fluid-like state, a uniform fluid-like pressure distribution is achieved. The forming pressure P_{F} is with such a material thus applied to the cellulose blank structure 2 from all directions, and the deformation element may exert an isostatic forming pressure on the cellulose blank structure 2 during the dry-forming of the cellulose products 1.

The deformation element may be made of a suitable structure of elastomeric material or materials, and as an example, the deformation element may be made of a massive structure or an essentially massive structure of silicone rubber, polyurethane, polychloroprene, or rubber with a hardness in the range 20-90 Shore A, e.g. be a massive deformation element. Other materials for the deformation element E may for example be suitable gel materials, liquid crystal elastomers, and MR fluids. Instead of using a single deformation element structure, a plurality of deformation element structures may be used.

In some example embodiments, the deformation element essentially retains its volume during pressing and only its shape is changed to ensure that the forming pressure P_{F} is applied to the cellulose blank structure.

**With massive** deformation element is meant a flexible structure, which has a similar ability to exert the forming pressure P_{F} on the cellulose blank structure 2, in the same way as the deformation element described in the embodiments above, but with a greater elastic deformation zone compared to thinner membrane structures. The massive deformation element may be constructed with a thick membrane structure or even be made of a homogenous body of a flexible material. The flexible material may have properties that will make the material float out between the forming mould parts 3a and 3b when the forming pressure P_{F} is applied.

In a further alternative non-illustrated embodiment, the massive deformation element may have a varied thickness, where the massive deformation element is for example shaped or casted into a structure with a varied thickness. The thinner and thicker areas of the massive deformation element with varied thickness may compensate for areas in the forming mould parts 3a, 3b which need smaller or bigger deformation of the membrane in order to equalize or even out the pressure exerted on the cellulose blank structure 2. By using a massive deformation element structure, the forming mould 3 can be made cheaper and simpler in construction.

The massive deformation element is constructed so that when the pressure is applied from the forming mould parts 3a and 3b, the massive deformation element deforms in order to exert the forming pressure P_{F} on the cellulose blank structure. The massive deformation element may be made of a material with suitable properties as mentioned above. Other suitable materials or combinations of materials with elastomeric properties may also be used. Due to the flexible properties of the massive deformation element, the massive deformation element exerts an even pressure on the cellulose blank structure 2.

A further advantage with an elastic deformation element is that it will return to its original position or shape after a compression event automatically due to the inherent characteristic of the elastic deformation element.

As shown in figure 2c, the first mould part 3a and the second mould part 3b are at least partly arranged in an overlapping relationship in the longitudinal direction D_{LO} during forming of the cellulose products 1. In this way, a longitudinally overlapping section S_{OL} is established between the first mould part 3a and the second mould part 3b. The first mould part section 4a and the second mould part section 4b are **configured** for applying the forming pressure P_{F} onto the air-formed cellulose blank structure 2 in the range of 1-100 MPa, preferably in the range of 4-20 MPa, during a single pressing operation O_{SP} upon forming of the cellulose products 1 in the forming mould 3.

Depending on the design of the forming mould 3, the base structure 5 may also apply the forming pressure P_{F} onto a part or section of the air-formed cellulose blank structure 2 in the range of 1-100 MPa, preferably in the range of 4-20 MPa, during the single pressing operation O_{SP}. In the illustrated embodiment, the upper part of the cellulose blank 2 is formed between the base structure 5 and the second mould part, as shown in figure 2c.

With a single pressing operation O_{SP} is meant that the cellulose product 1 is formed from the cellulose blank structure 2 in one single pressing step in the forming mould 3 of the pressing module PM. In the single pressing operation O_{SP}, the first mould part 3a and the second mould part 3b are interacting with each other for establishing the forming pressure P_{F} and the forming temperature T_{F} during a single operational engagement step. Thus, in the single pressing operation O_{SP}, the forming pressure P_{F} and the forming temperature T_{F} are not applied to the cellulose blank structure in two or more repeated pressing operations.

The first mould part section 4a and the second mould part section 4b are in the overlapping relationship at least partly configured for being positioned in the longitudinally overlapping section S_{OL} between the first mould part 3a and the second mould part 3b. During the single pressing operation O_{SP}, the second mould part section 4b is displaced relative to the first mould part section 4a in the lateral direction D_{LA} towards the second mould part 3b from an initial position P_{I} to a pressing position P_{P} during forming of the cellulose products 1. After the forming of the cellulose products 1 in the single pressing operation O_{SP}, the second mould part section 4b is displaced relative to the first mould part section 4a in the lateral direction D_{LA} away from the second mould part 3b from the pressing position P_{P} back to the initial position P_{I}.

To form the cellulose products 1 from the air-formed cellulose blank structure 2 in a single pressing operation O_{SP}, the air-formed cellulose blank structure 2 is provided from a suitable source and thereafter arranged between the first mould part 3a and the second mould part 3b, as shown in figure 2a. When the cellulose blank structure 2 is arranged between the first mould part 3a and the second mould part 3b, the first mould part 3a is moved towards the second mould part 3b in the pressing direction D_{P}, as indicated with the arrow in figure 2a. The first mould part 3a is during the movement pushing the cellulose blank structure 2 into the second mould part 3b, as understood from figure 2b. In figure 2b, the first mould part section 4a has reached a position where the lower end of the first mould part section 4a is pushing the cellulose blank structure 2 towards a bottom section of the second mould part 3b. Upon movement of the first mould part 3a towards the second mould part 3b, the first mould part 3a and the second mould part 3b are arranged into an at least partly overlapping relationship in the longitudinal direction D_{LO}, and in the overlapping relationship the first mould part section 4a and the second mould part section 4b are at least partly positioned in a longitudinally overlapping section S_{OL} between the first mould part 3a and the second mould part 3b, as shown in figures 2b-c.

Upon further movement of the first mould part 3a towards the second mould part 3b, the base structure 5 is moved in the pressing direction D_{P} into the position shown in figure 2c, and when the base structure 5 is moving in the pressing direction D_{P}, the forming pressure P_{F} is built up in the forming mould 3 by a relative movement between the base structure 5 and the first mould part section 4a. This relative movement between the base structure 5 and the first mould part section 4a is causing a deformation of the deformation element in the lateral direction D_{LA}, and the deformation element is as described above forming the second mould part section 4b. Through the deformation of the deformation element, the second mould part section 4b is displaced relative to the first mould part section 4a in the lateral direction D_{LA}. During forming of the cellulose products 1, the second mould part section 4b is displaced relative to the first mould part section 4a in the lateral direction D_{LA} towards the second mould part 3b from an initial position P_{I}, as shown in figures 2a-b, to a pressing position P_{P}, as shown in figure 2c. With this configuration, the first mould part section 4a is displaced relative to the base structure 5 in the longitudinal direction D_{LO}, and the second mould part section 4b is displaced in the lateral direction D_{LA} upon movement of the first mould part section 4a relative to the base structure 5. The second mould part section 4b is in this way displaced relative to the first mould part section 4a in the lateral direction D_{LA} through deformation of the deformation element. The air-formed cellulose blank structure 2 is pressed by the pressing surface 6 of the second mould part section 4b in the lateral direction D_{LA} towards the second mould part 3b during forming of the cellulose products 1, and the air-formed cellulose blank structure 2 is thus pressed by the pressing surface 6 in the lateral direction D_{LA} towards the forming structure 7 and into the recess during forming of the cellulose products, as shown in figure 2c.

In the embodiment illustrated in figures 2a-c, the forming pressure P_{F} is applied by the first mould part section 4a, the second mould part section 4b, and the base structure 5 onto the air-formed cellulose blank structure 2 in the range of 1-100 MPa, preferably in the range of 4-20 MPa, for forming the cellulose products 1 in the forming mould 3. In this way, the forming pressure P_{F} is established onto the air-formed cellulose blank structure 2 between the first mould part section 4a and the second mould part 3b, between the second mould part section 4b and the second mould part 3b, and between the base structure 5 and the second mould part 3b. The forming temperature T_{F} is during the forming applied onto the air-formed cellulose blank structure 2 when the first mould part 3a and the second mould part 3b are displaced into the at least partly overlapping relationship in the longitudinal direction D_{LO}, and the forming temperature T_{F} is in the range of 100-300 °C, preferably in the range of 100-200 °C. After forming of the cellulose products 1, the second mould part section 4b is displaced relative to the first mould part section 4a in the lateral direction D_{LA} away from the second mould part 3b from the pressing position P_{P} back to the initial position P_{I}.

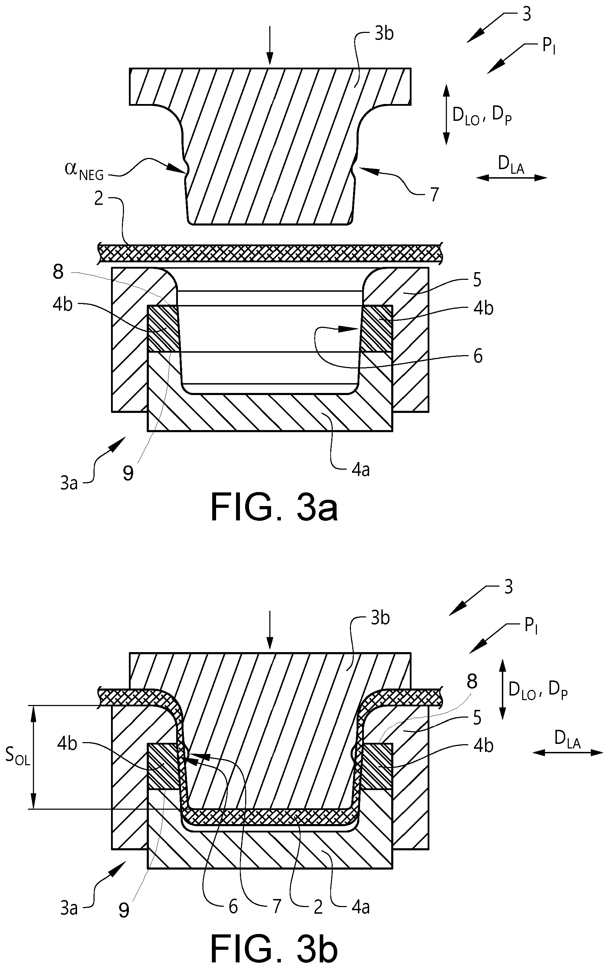

An alternative embodiment of the forming mould 3 is illustrated more in detail in figures 3a-c. In this alternative embodiment, the first mould part 3a is arranged as a negative mould part, and the second mould part 3b is arranged as a positive mould part. The second mould part 3b is movably arranged and the first mould part 3a is stationary. The first mould part 3a comprises a first mould part section 4a and a second mould part section 4b. The second mould part section 4b is arranged in connection to the first mould part section 4a. The second mould part section 4b is configured for being displaced relative to the first mould part section 4a in a lateral direction D_{LA} of the pressing module PM during forming of the cellulose products 1 in the forming mould 3. The lateral direction D_{LA} is a direction perpendicular to, or essentially perpendicular to, the pressing direction D_{P} and the longitudinal direction D_{LO} of the pressing module PM.

The first mould part 3a further comprises a base structure 5 arranged in connection to the first mould part section 4a and the second mould part section 4b. The first mould part section 4a and the base structure 5 are movably arranged relative to each other in the pressing direction D_{P}. Upon movement of the first mould part section 4a and the base structure 5 relative to each other, the second mould part section 4b is displaced in the lateral direction D_{LA}, as understood from figures 3a-c.

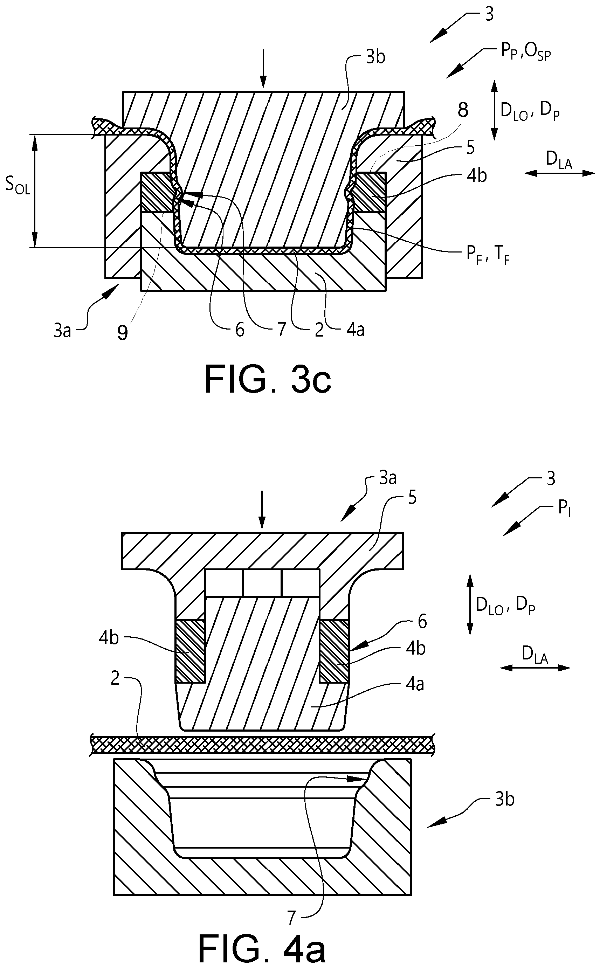

The second mould part section 4b is in this embodiment arranged as a deformation element. The second mould part section 4b formed by the deformation element comprises a pressing surface 6 configured for pressing the air-formed cellulose blank structure 2 in the lateral direction D_{LA} towards the second mould part 3b during forming of the cellulose products 1, as illustrated in figure 3c. The second mould part 3b comprises a forming structure 7 configured for interacting with the pressing surface 6, and in this way the pressing surface 6 is pressing the air-formed cellulose blank structure 2 in the lateral direction D_{LA} towards the forming structure 7 during forming of the cellulose products 1. The forming structure 7 is arranged as a recess in the second mould part 3b, and the pressing surface 6 is pressing the air-formed cellulose blank structure 2 into the recess during forming of the cellulose products 1. The recess is with this configuration forming an undercut section of the second mould part with a negative draft angle α_{NEG}, as shown in figure 3c. The forming structure 7 may extend along the second mould part 3b as a single continuous recess. In an alternative non-illustrated embodiment, the forming structure 7 is arranged as a plurality of recesses arranged along the second mould part 3b. In a further alternative non-illustrated embodiment, the forming structure 7 is arranged as recess having a spiral shape that is forming a threaded structure in the cellulose product 1 during forming. It should be understood that in alternative embodiments, the second mould part section 4b could be arranged as two or more deformation elements.

The deformation element forming the second mould part section 4b in the embodiment illustrated in figures 3a-c has a ring-like shape or configuration, and the deformation element is arranged between the first mould part section 4a and the base structure 5. The deformation element may be arranged as a single structural part or alternatively two or more structural parts. The deformation element forming the second mould part section 4b is arranged between the base structure surface 8 and the first mould part section surface 9 as described in conjunction with figures 2a-2c.

The deformation element is configured for exerting the forming pressure P_{F} on the cellulose blank structure 2 during forming of the cellulose products 1. The deformation element may be attached with suitable attachment means to the first mould part section 4a and the base structure 5, such as for example glue or mechanical fastening members. Alternatively, the deformation element is positioned between the first mould part section 4a and the base structure 5 without any attachment means and instead held in position through the configuration of the first mould part section 4a and the base structure 5, as understood from the figures.

During the forming of the cellulose products 1, the deformation element is deformed to exert the forming pressure P_{F} on the cellulose blank structure 2 in the forming mould 3, and through deformation of the deformation element, an even pressure distribution is achieved even if the cellulose products are having complex three-dimensional shapes, such as the shape established by the forming structure 7 with a recessed undercut section having a negative draft angle α_{NEG}, or if the cellulose blank structure 2 is having a varied thickness. The deformation element may be made of the materials and have the configurations and properties described above in connection to the embodiment illustrated in figures 2a-c.

As shown in figure 3c, the first mould part 3a and the second mould part 3b are at least partly arranged in an overlapping relationship in the longitudinal direction D_{LO} during forming of the cellulose products 1. In this way, a longitudinally overlapping section S_{OL} is established between the first mould part 3a and the second mould part 3b. The first mould part section 4a and the second mould part section 4b are configured for applying the forming pressure P_{F} onto the air-formed cellulose blank structure 2 in the range of 1-100 MPa, preferably in the range of 4-20 MPa, during a single pressing operation O_{SP} upon forming of the cellulose products 1 in the forming mould 3.

Depending on the design of the forming mould 3, the base structure 5 may also apply the forming pressure P_{F} onto a part or section of the air-formed cellulose blank structure 2 in the range of 1-100 MPa, preferably in the range of 4-20 MPa, during the single pressing operation O_{SP}. In the illustrated embodiment, the upper part of the cellulose blank 2 is formed between the base structure 5 and the second mould part 3b, as shown in figure 3c.

**With a single** pressing operation O_{SP} is meant that the cellulose product 1 is formed from the cellulose blank structure 2 in one single pressing step in the forming mould 3 of the pressing module PM. In the single pressing operation O_{SP} the first mould part 3a and the second mould part 3b are interacting with each other for establishing the forming pressure P_{F} and the forming temperature T_{F} during a single operational engagement step. Thus, in the single pressing operation O_{SP}, the forming pressure P_{F} and the forming temperature T_{F} are not applied to the cellulose blank structure in two or more repeated pressing operations.

The first mould part section 4a and the second mould part section 4b are in the overlapping relationship at least partly configured for being positioned in the longitudinally overlapping section S_{OL} between the first mould part 3a and the second mould part 3b. During the single pressing operation O_{SP}, the second mould part section 4b is displaced relative to the first mould part section 4a in the lateral direction D_{LA} towards the second mould part 3b from an initial position P_{I} to a pressing position P_{P} during forming of the cellulose products 1. After the forming of the cellulose products 1 in the single pressing operation O_{SP}, the second mould part section 4b is displaced relative to the first mould part section 4a in the lateral direction D_{LA} away from the second mould part 3b from the pressing position P_{P} back to the initial position P_{I}.

To form the cellulose products 1 from the air-formed cellulose blank structure 2 in a single pressing operation O_{SP}, the air-formed cellulose blank structure 2 is provided from a suitable source and thereafter arranged between the first mould part 3a and the second mould part 3b, as shown in figure 3a. When the cellulose blank structure 2 is arranged between the first mould part 3a and the second mould part 3b, the second mould part 3b is moved towards the first mould part 3a in the pressing direction D_{P}, as indicated with the arrow in figure 3a. The second mould part 3b is during the movement pushing the cellulose blank structure 2 into the first mould part 3a, as understood from figure 3b. In figure 3b, the second mould part 3b has reached a position where a lower end of the second mould part 3b is pushing the cellulose blank structure 2 towards a bottom section of the first mould part 3a constituted by the first mould part section 4a. Upon the movement of the second mould part 3b towards the first mould part 3a, the first mould part 3a and the second mould part 3b are arranged into an at least partly overlapping relationship in the longitudinal direction D_{LO}, and in the overlapping relationship the first mould part section 4a and the second mould part section 4b are at least partly positioned in a longitudinally overlapping section S_{OL} between the first mould part 3a and the second mould part 3b, as shown in figures 3b-c.

Upon further movement of the second mould part 3b in the pressing direction D_{P} towards the first mould part 3a, the base structure 5 is moved in the pressing direction D_{P} into the position shown in figure 3c, and when the base structure 5 is moving in the pressing direction D_{P}, the forming pressure P_{F} is built up in the forming mould 3 by a relative movement between the base structure 5 and the first mould part section 4a. This relative movement between the base structure 5 and the first mould part section 4a is causing a deformation of the deformation element in the lateral direction D_{LA}, and the deformation element is as described above forming the second mould part section 4b. Through the deformation of the deformation element, the second mould part section 4b is displaced relative to the first mould part section 4a in the lateral direction D_{LA}. During forming of the cellulose products 1, the second mould part section 4b is displaced relative to the first mould part section 4a in the lateral direction D_{LA} towards the second mould part 3b from an initial position P_{I}, as shown in figures 3a-b, to a pressing position P_{P}, as shown in figure 3c. With this configuration, the first mould part section 4a and the base structure 5 are displaced relative to each other in the longitudinal direction D_{LO}, and the second mould part section 4b is displaced in the lateral direction D_{LA} upon movement of the first mould part section 4a and the base structure 5 relative to each other. The second mould part section 4b is in this way displaced relative to the first mould part section 4a in the lateral direction D_{LA} through deformation of the deformation element. The air-formed cellulose blank structure 2 is pressed by the pressing surface 6 in the lateral direction D_{LA} towards the second mould part 3b during forming of the cellulose products 1, and the air-formed cellulose blank structure 2 is thus pressed by the pressing surface 6 in the lateral direction D_{LA} towards the forming structure 7 and into the recess during forming of the cellulose products, as shown in figure 3c.

In the embodiment illustrated in figures 3a-c, the forming pressure P_{F} is applied by the first mould part section 4a, the second mould part section 4b, and the base structure 5 onto the air-formed cellulose blank structure 2 in the range of 1-100 MPa, preferably in the range of 4-20 MPa, for forming the cellulose products 1 in the forming mould 3. In this way, the forming pressure P_{F} is established onto the air-formed cellulose blank structure 2 between the first mould part section 4a and the second mould part 3b, between the second mould part section 4b and the second mould part 3b, and between the base structure 5 and the second mould part 3b. The forming temperature T_{F} is during the forming applied onto the air-formed cellulose blank structure 2 when the first mould part 3a and the second mould part 3b are displaced into the at least partly overlapping relationship in the longitudinal direction D_{LO}, and the forming temperature T_{F} is in the range of 100-300 °C, preferably in the range of 100-200 °C. After forming of the cellulose products 1, the second mould part section 4b is displaced relative to the first mould part section 4a in the lateral direction D_{LA} away from the second mould part 3b from the pressing position P_{P} back to the initial position P_{I}.

A further embodiment of the forming mould 3 is illustrated more in detail in figures 4a-c. In this embodiment, the first mould part 3a is arranged as a positive mould part, and the second mould part 3b is arranged as a negative mould part, with a configuration similar to the embodiment illustrated in figures 2a-c. In this embodiment however, the second mould part 3b has a shallower configuration, suitable for forming lid structures or other similar product structures. The first mould part 3a is movably arranged and the second mould part 3b is stationary. The first mould part 3a comprises a first mould part section 4a, a second mould part section 4b, and a base structure with the configuration and function described above in connection to the embodiment illustrated in figures 2a-c. The second mould part section 4b is configured for being displaced relative to the first mould part section 4a in a lateral direction D_{LA} of the pressing module PM during forming of the cellulose products 1 in the forming mould 3.

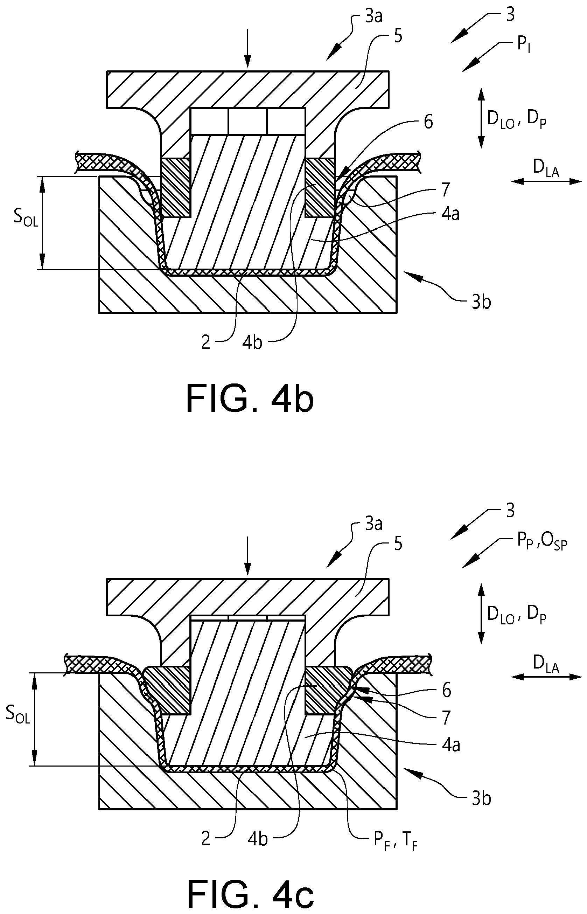

The second mould part section 4b is also in this embodiment arranged as a deformation element, as described above, and the second mould part section 4b formed by the deformation element comprises a pressing surface 6 configured for pressing the air-formed cellulose blank structure 2 in the lateral direction D_{LA} towards the second mould part 3b during forming of the cellulose products 1, as illustrated in figure 4c. The second mould part 3b comprises an upper shaped forming structure 7 configured for interacting with the pressing surface 6, and in this way the pressing surface 6 is pressing the air-formed cellulose blank structure 2 in the lateral direction D_{LA} towards the forming structure 7 during forming of the cellulose products 1. The forming structure 7 is arranged as an edge recess in the second mould part 3b, and the pressing surface 6 is pressing the air-formed cellulose blank structure 2 into the recess during forming of the cellulose products 1. The recess is with this configuration forming an upper shaped section of the second mould part 3b, as shown in figure 4c. The forming structure 7 may extend along the second mould part 3b as a single continuous recess. In an alternative non-illustrated embodiment, the forming structure 7 is arranged as a plurality of recesses arranged along the second mould part 3b. It should be understood that in alternative embodiments, the second mould part section 4b could be arranged as two or more deformation elements.

During the forming of the cellulose products 1, the deformation element is deformed to exert the forming pressure P_{F} on the cellulose blank structure 2 in the forming mould 3, and through deformation of the deformation element, an even pressure distribution is achieved even if the cellulose products are having complex three-dimensional shapes, such as the shape established by the forming structure 7, or if the cellulose blank structure 2 is having a varied thickness. The deformation element may be made of the materials and have the configurations and properties described above in connection to the embodiment illustrated in figures 2a-c.

As shown in figure 4c, the first mould part 3a and the second mould part 3b are at least partly arranged in an overlapping relationship in the longitudinal direction D_{LO} during forming of the cellulose products 1. In this way, a longitudinally overlapping section S_{OL} is established between the first mould part 3a and the second mould part 3b. The first mould part section 4a and the second mould part section 4b are configured for applying the forming pressure P_{F} onto the air-formed cellulose blank structure 2 in the range of 1-100 MPa, preferably in the range of 4-20 MPa, during a single pressing operation O_{SP} upon forming of the cellulose products 1 in the forming mould 3. In this embodiment however, the base structure 5 is not applying any forming pressure P_{F} onto the air-formed cellulose blank structure 2. In the illustrated embodiment, the upper part of the cellulose blank 2 is formed between the deformation element and the second mould part 3b, as shown in figure 4c.

With a single pressing operation O_{SP} is meant that the cellulose product 1 is formed from the cellulose blank structure 2 in one single pressing step in the forming mould 3 of the pressing module PM. In the single pressing operation O_{SP}, the first mould part 3a and the second mould part 3b are interacting with each other for establishing the forming pressure P_{F} and the forming temperature T_{F} during a single operational engagement step. Thus, in the single pressing operation O_{SP}, the forming pressure P_{F} and the forming temperature T_{F} are not applied to the cellulose blank structure in two or more repeated pressing operations.

The first mould part section 4a and the second mould part section 4b are in the overlapping relationship at least partly configured for being positioned in the longitudinally overlapping section S_{OL} between the first mould part 3a and the second mould part 3b. During the single pressing operation O_{SP}, the second mould part section 4b is displaced relative to the first mould part section 4a in the lateral direction D_{LA} towards the second mould part 3b from an initial position P_{I} to a pressing position P_{P} during forming of the cellulose products 1. After the forming of the cellulose products 1 in the single pressing operation O_{SP}, the second mould part section 4b is displaced relative to the first mould part section 4a in the lateral direction D_{LA} away from the second mould part 3b from the pressing position P_{P} back to the initial position P_{I}.

To form the cellulose products 1 from the air-formed cellulose blank structure 2 in a single pressing operation O_{SP}, the air-formed cellulose blank structure 2 is provided from a suitable source and thereafter arranged between the first mould part 3a and the second mould part 3b, as shown in figure 4a. When the cellulose blank structure 2 is arranged between the first mould part 3a and the second mould part 3b, the first mould part 3a is moved towards the second mould part 3b in the pressing direction D_{P}, as indicated with the arrow in figure 4a. The first mould part 3a is during the movement pushing the cellulose blank structure 2 into the second mould part 3b, as understood from figure 4b. In figure 4b, the first mould part section 4a has reached a position where the lower end of the first mould part section 4a is pushing the cellulose blank structure 2 towards a bottom section of the second mould part 3b. Upon movement of the first mould part 3a towards the second mould part 3b, the first mould part 3a and the second mould part 3b are arranged into an at least partly overlapping relationship in the longitudinal direction D_{LO}, and in the overlapping relationship the first mould part section 4a and the second mould part section 4b are at least partly positioned in a longitudinally overlapping section S_{OL} between the first mould part 3a and the second mould part 3b, as shown in figures 4b-c.

Upon further movement of the first mould part 3a towards the second mould part 3b, the base structure 5 is moved in the pressing direction D_{P} into the position shown in figure 4c, and when the base structure 5 is moving in the pressing direction D_{P}, the forming pressure P_{F} is built up in the forming mould 3 by a relative movement between the base structure 5 and the first mould part section 4a. This relative movement between the base structure 5 and the first mould part section 4a is causing a deformation of the deformation element in the lateral direction D_{LA}, and the deformation element is as described above forming the second mould part section 4b. Through the deformation of the deformation element, the second mould part section 4b is displaced relative to the first mould part section 4a in the lateral direction D_{LA}. During forming of the cellulose products 1, the second mould part section 4b is displaced relative to the first mould part section 4a in the lateral direction D_{LA} towards the second mould part 3b from an initial position P_{I}, as shown in figures 4a-b, to a pressing position P_{P}, as shown in figure 4c. With this configuration, the first mould part section 4a is displaced relative to the base structure 5 in the longitudinal direction D_{LO}, and the second mould part section 4b is displaced in the lateral direction D_{LA} upon movement of the first mould part section 4a relative to the base structure 5. The second mould part section 4b is in this way displaced relative to the first mould part section 4a in the lateral direction D_{LA} through deformation of the deformation element. The air-formed cellulose blank structure 2 is pressed by the pressing surface 6 of the second mould part section 4b in the lateral direction D_{LA} towards the second mould part 3b during forming of the cellulose products 1, and the air-formed cellulose blank structure 2 is thus pressed by the pressing surface 6 in the lateral direction D_{LA} towards the forming structure 7 and into the recess during forming of the cellulose products, as shown in figure 4c.

In the embodiment illustrated in figures 4a-c, the forming pressure P_{F} is applied by the first mould part section 4a and the second mould part section 4b onto the air-formed cellulose blank structure 2 in the range of 1-100 MPa, preferably in the range of 4-20 MPa, for forming the cellulose products 1 in the forming mould 3. In this way, the forming pressure P_{F} is established onto the air-formed cellulose blank structure 2 between the first mould part section 4a and the second mould part 3b, and between the second mould part section 4b and the second mould part 3b. The forming temperature T_{F} is during the forming applied onto the air-formed cellulose blank structure 2 when the first mould part 3a and the second mould part 3b are displaced into the at least partly overlapping relationship in the longitudinal direction D_{LO}, and the forming temperature T_{F} is in the range of 100-300 °C, preferably in the range of 100-200 °C. After forming of the cellulose products 1, the second mould part section 4b is displaced relative to the first mould part section 4a in the lateral direction D_{LA} away from the second mould part 3b from the pressing position P_{P} back to the initial position P_{I}.

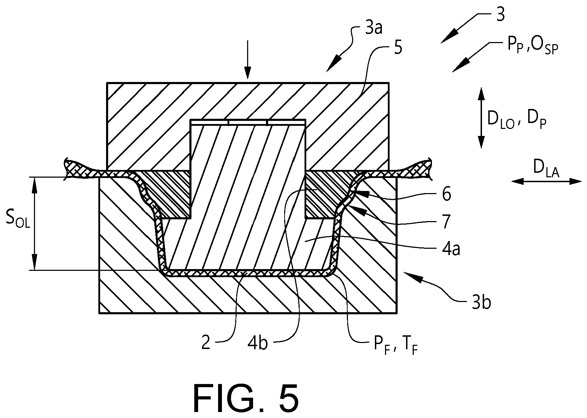

A further embodiment of the forming mould 3 is illustrated more in detail in figure 5. In this embodiment, the first mould part 3a is arranged as a positive mould part, and the second mould part 3b is arranged as a negative mould part. The forming mould 3 has in this embodiment a configuration similar to the embodiment illustrated in figures 4a-c. However, in the embodiment shown in figure 5, the base structure 5 has a different configuration for limiting the extension of the deformation element forming the second mould part section 4b. Upon forming of the cellulose products 1 from the cellulose blank structure 2, an outer lateral part of the base structure 5 is limiting deformation of the deformation element in the longitudinal direction D_{LO} in a pressing position P_{P}, as understood from the figure.

In a further alternative non-illustrated embodiment, the second mould part section is arranged as one or more displaceable stiff mould elements instead of one or more deformation elements. The configuration of the forming mould may be similar to the ones described above, but instead the stiff mould elements are displaced relative to the first mould part section in a lateral direction of the pressing module during forming of the cellulose products in the forming mould. With such a configuration, the first mould part comprises a first mould part section and the second mould part section arranged in connection to the first mould part section. The second mould part section is configured for being displaced relative to the first mould part section in the lateral direction of the pressing module during forming of the cellulose products in the forming mould. The first mould part section and the second mould part section are configured for applying a forming pressure onto the air-formed cellulose blank structure in the range of 1-100 MPa, preferably in the range of 4-20 MPa, during a single pressing operation upon forming of the cellulose products in the forming mould. The first mould part may further comprise a base structure arranged in connection to the first mould part section and the second mould part section. The first mould part section and the base structure are movably arranged in the longitudinal direction relative to each other. Upon movement of the first mould part section and the base structure relative to each other, the one or more displaceable stiff mould elements constituting the second mould part section are configured for being displaced in the lateral direction. The first mould part may for example be arranged with one or more actuators for movement of the one or more displaceable stiff mould elements, where the relative movement between the first mould part section and the base structure in the longitudinal direction is used by the actuators for the lateral displacement of the one or more displaceable stiff mould elements. Alternatively, the actuators comprises actuating means that is displacing the one or more displaceable stiff mould elements without impact from the relative movement between the first mould part section and the base structure.

For the different embodiments, the first mould part section 4a, the base structure 5, and the second mould part 3b, may be made of a stiff mould material, such as for example steel, aluminium or other suitable metals or metallic materials, or alternatively a combination of different suitable materials that also may include combinations of metals, metallic materials, and composite materials.

It should be understood that the pressing module PM with the forming mould 3 may have other designs and constructions compared to the one described in the embodiments above. The forming mould 3 may also for the different embodiments be arranged with a cutting device, where the cellulose products 1 are cut in the forming mould into a desired shape during the forming process. When the cellulose products 1 have been cut from the cellulose material in the forming process, a remaining residual cellulose fibre structure is formed. The residual cellulose fibre structure could be recycled and used again when air-forming new cellulose blank structures 2.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the appended claims. Reference signs mentioned in the claims should not be seen as limiting the extent of the matter protected by the claims, and their sole function is to make claims easier to understand.

### REFERENCE SIGNS

- 1:: Cellulose product
- 2:: Cellulose blank structure
- 3:: Forming mould
- 3a:: First mould part
- 3b:: Second mould part
- 4a:: First mould part section
- 4b:: Second mould part section
- 5:: Base structure
- 6:: Pressing surface
- 7:: Forming structure
- 8:: Base structure surface
- 9:: First mould part section surface

- α_{NEG}:: Negative draft angle.
- D_{LA}:: Lateral direction
- D_{LO}:: Longitudinal direction
- D_{P}:: Pressing direction
- O_{SP}:: Single pressing operation
- P_{I}:: Initial position
- P_{P}:: Pressing position
- PM:: Pressing module
- S_{OL}:: Longitudinally overlapping section

## Claims

1. A pressing module (PM) for forming cellulose products (1) from an air-formed cellulose blank structure (2), wherein the pressing module (PM) comprises a forming mould (3) with a first mould part (3a) and a second mould part (3b) configured for interacting with each other for forming the cellulose products (1) from the air-formed cellulose blank structure (2) in the forming mould (3), wherein the first mould part (3a) and/or the second mould part (3b) are movably arranged relative to each other in a pressing direction (D_{P}) parallel to a longitudinal direction (D_{LO}) of the pressing module (PM), wherein the first mould part (3a) and the second mould part (3b) at least partly are configured for being arranged in an overlapping relationship in the longitudinal direction (D_{LO}) during forming of the cellulose products (1),
wherein the first mould part (3a) comprises a first mould part section (4a), a second mould part section (4b) arranged in connection to the first mould part section (4a), and a base structure (5) arranged in connection to the first mould part section (4a) and the second mould part section (4b), wherein the first mould part section (4a) and the base structure (5) are movably arranged in the longitudinal direction (D_{LO}) relative to each other, wherein upon movement of the first mould part section (4a) and the base structure (5) relative to each other, the second mould part section (4b) is configured for being displaced relative to the first mould part section (4a) and to the base structure (5) in the lateral direction (D_{LA}) of the pressing module (PM) during forming of the cellulose products (1) in the forming mould (3),
**characterized in that** the second mould part section (4b) is an elastic deformation element
wherein the first mould part section (4a) and the second mould part section (4b) are configured for applying a forming pressure (P_{F}) onto the air-formed cellulose blank structure (2) in the range of 1-100 MPa, preferably in the range of 4-20 Mpa, during a single pressing operation (O_{SP}) upon forming of the cellulose products (1) in the forming mould (3).

2. The pressing module (PM) according to claim 1,
wherein the first mould part section (4a) and the second mould part section (4b) in the overlapping relationship at least partly are configured for being positioned in a longitudinally overlapping section (S_{OL}) between the first mould part (3a) and the second mould part (3b).

3. The pressing module (PM) according to claim 1 or 2,
wherein the second mould part section (4b) is configured for being displaced relative to the first mould part section (4a) in the lateral direction (D_{LA}) towards the second mould part (3b) from an initial position (P_{I}) to a pressing position (P_{P}) during forming of the cellulose products (1).

4. The pressing module (PM) according to claim 3,
wherein the second mould part section (4b) is configured for being displaced relative to the first mould part section (4a) in the lateral direction (D_{LA}) away from the second mould part (3b) from the pressing position (P_{P}) back to the initial position (P_{I}) after forming of the cellulose products (1).

5. The pressing module (PM) according to any preceding claim,
wherein the second mould part section (4b) comprises a pressing surface (6) configured for pressing the air-formed cellulose blank structure (2) in the lateral direction (D_{LA}) towards the second mould part (3b) during forming of the cellulose products (1).

6. The pressing module (PM) according to claim 5,
wherein the second mould part (3b) comprises a forming structure (7) configured for interacting with the pressing surface (6), wherein the pressing surface (6) is configured for pressing the air-formed cellulose blank structure (2) in the lateral direction (D_{LA}) towards the forming structure (7) during forming of the cellulose products (1).

7. The pressing module (PM) according to claim 6,
wherein the forming structure (7) is arranged as a recess in the second mould part (3b) and wherein the pressing surface (6) is configured for pressing the air-formed cellulose blank structure (2) into the recess during forming of the cellulose products (1).

8. The pressing module (PM) according to any preceding claim,
wherein the second mould part section (4b) is arranged as two or more elastic deformation elements.

9. A method for forming cellulose products (1) from an air-formed cellulose blank structure (2) in a pressing module (PM), wherein the pressing module (PM) comprises a forming mould (3) with a first mould part (3a) and a second mould part (3b) configured for interacting with each other for forming the cellulose products (1) from the air-formed cellulose blank structure (2) in the forming mould (3), wherein the first mould part (3a) and/or the second mould part (3b) are movably arranged relative to each other in a pressing direction (D_{P}) parallel to a longitudinal direction (D_{LO}) of the pressing module (PM), wherein the first mould part (3a) comprises a first mould part section (4a), a second mould part section (4b) arranged in connection to the first mould part section (4a) and a base structure (5) arranged in connection to the first mould part section (4a) and the second mould part section (4b), wherein the first mould part section (4a) and the base structure (5) are movably arranged in the longitudinal direction (D_{LO}) relative to each other, wherein the second mould part section (4b) is an elastic deformation element, wherein the method in a single pressing operation (O_{SP}) comprises the steps:
providing the air-formed cellulose blank structure (2) and arranging the air-formed cellulose blank structure (2) between the first mould part (3a) and the second mould part (3b);
displacing the first mould part (3a) and/or the second mould part (3b) into an at least partly overlapping relationship in the longitudinal direction (D_{LO}), wherein in the overlapping relationship the first mould part section (4a) and the second mould part section (4b) are at least partly positioned in a longitudinally overlapping section (S_{OL}) between the first mould part (3a) and the second mould part (3b);
displacing the first mould part section (4a) and the base structure (5) relative to each other in the longitudinal direction (D_{LO}), and displacing the second mould part section (4b) relative to the first mould part section (4a) in the lateral direction (D_{LA}) of the pressing module (PM) through deformation of the second mould part section (4b) upon movement of the first mould part section (4a) and the base structure (5) relative to each other, and
applying a forming pressure (P_{F}) by the first mould part section (4a) and the second mould part section (4b) onto the air-formed cellulose blank structure (2) in the range of 1-100 Mpa, preferably in the range of 4-20 Mpa, for forming the cellulose products (1) in the forming mould (3).

10. The method according to claim 9,
wherein the method further comprises the step: applying a forming temperature (T_{F}) onto the air-formed cellulose blank structure (2) when the first mould part (3a) and the second mould part (3b) are displaced into the at least partly overlapping relationship in the longitudinal direction (D_{LO}), wherein the forming temperature (T_{F}) is in the range of 100-300 °C, preferably in the range of 100-200 °C.

11. The method according to claim 10,
wherein the method further comprises the step: establishing the forming pressure (P_{F}) onto the air-formed cellulose blank structure (2) between the first mould part section (4a) and the second mould part (3b) and between the second mould part section (4b) and the second mould part (3b).

12. The method according to any of claims 9 to 11,
wherein the method further comprises the step: displacing the second mould part section (4b) relative to the first mould part section (4a) in the lateral direction (D_{LA}) towards the second mould part (3b) from an initial position (P_{I}) to a pressing position (P_{P}) during forming of the cellulose products (1).

13. The method according to claim 12,
wherein the method further comprises the step: displacing the second mould part section (4b) relative to the first mould part section (4a) in the lateral direction (D_{LA}) away from the second mould part (3b) from the pressing position (P_{P}) back to the initial position (P_{I}) after forming of the cellulose products (1).

14. The method according to any of claims 9 to 13,
wherein the second mould part section (4b) comprises a pressing surface (6), wherein the method further comprises the step: pressing the air-formed cellulose blank structure (2) by the pressing surface (6) in the lateral direction (D_{LA}) towards the second mould part (3b) during forming of the cellulose products (1).

15. The method according to claim 14,
wherein the second mould part (3b) comprises a forming structure (7) configured for interacting with the pressing surface (6), wherein the method further comprises the step: pressing the air-formed cellulose blank structure (2) by the pressing surface (6) in the lateral direction (D_{LA}) towards the forming structure (7) during forming of the cellulose products (1).

16. The method according to claim 15,
wherein the forming structure (7) is arranged as a recess in the second mould part (3b), wherein the method further comprises the step: pressing the air-formed cellulose blank structure (2) by the pressing surface (6) into the recess during forming of the cellulose products (1).

17. The method according to any of claims 9 to 16,
wherein the second mould part section (4b) is arranged as two or more elastic deformation elements, wherein the method further comprises the step: displacing the two or more elastic deformation elements relative to the first mould part section (4a) in the lateral direction (D_{LA}).

## Patentansprüche

1. Pressmodul (PM) zum Formen von Celluloseprodukten (1) aus einer luftgeformten Celluloserohlingsstruktur (2), wobei das Pressmodul (PM) eine Formgebungsform (3) mit einem ersten Formteil (3a) und einem zweiten Formteil (3b) umfasst, die dazu konfiguriert sind, zum Formen der Celluloseprodukte (1) aus der luftgeformten Celluloserohlingsstruktur (2) in der Formgebungsform (3) miteinander zu interagieren, wobei das erste Formteil (3a) und/oder das zweite Formteil (3b) in einer Pressrichtung (D_{P}) parallel zu einer Längsrichtung (D_{LO}) des Pressmoduls (PM) relativ zueinander bewegbar angeordnet sind, wobei das erste Formteil (3a) und das zweite Formteil (3b) mindestens teilweise dazu konfiguriert sind, während des Formens der Celluloseprodukte (1) in der Längsrichtung (D_{LO}) in einer überlappenden Beziehung angeordnet zu sein,
wobei das erste Formteil (3a) einen ersten Formteilabschnitt (4a), einen zweiten Formteilabschnitt (4b), der in Verbindung mit dem ersten Formteilabschnitt (4a) angeordnet ist, und eine Basisstruktur (5), die in Verbindung mit dem ersten Formteilabschnitt (4a) und dem zweiten Formteilabschnitt (4b) angeordnet ist, umfasst, wobei der erste Formteilabschnitt (4a) und die Basisstruktur (5) in der Längsrichtung (D_{LO}) relativ zueinander bewegbar angeordnet sind, wobei bei Bewegung des ersten Formteilabschnitts (4a) und der Basisstruktur (5) relativ zueinander der zweite Formteilabschnitt (4b) dazu konfiguriert ist, während dem Formen der Celluloseprodukte (1) in der Formgebungsform (3) relativ zu dem ersten Formteilabschnitt (4a) und zu der Basisstruktur (5) in der lateralen Richtung (D_{LA}) des Pressmoduls (PM) verschoben zu werden,
**dadurch gekennzeichnet, dass** der zweite Formteilabschnitt (4b) ein elastisches Verformungselement ist,
wobei der erste Formteilabschnitt (4a) und der zweite Formteilabschnitt (4b) dazu konfiguriert sind, einen Formdruck (P_{F}) auf die luftgeformte Celluloserohlingsstruktur (2) in dem Bereich von 1-100 MPa, bevorzugt in dem Bereich von 4-20 Mpa, während eines einzelnen Pressvorgangs (O_{SP}) beim Formen der Celluloseprodukte (1) in der Formgebungsform (3) anzuwenden.

2. Pressmodul (PM) nach Anspruch 1,
wobei der erste Formteilabschnitt (4a) und der zweite Formteilabschnitt (4b) in der überlappenden Beziehung mindestens teilweise dazu konfiguriert sind, in einem in Längsrichtung überlappenden Abschnitt (S_{OL}) zwischen dem ersten Formteil (3a) und dem zweiten Formteil (3b) positioniert zu sein.

3. Pressmodul (PM) nach Anspruch 1 oder 2,
wobei der zweite Formteilabschnitt (4b) dazu konfiguriert ist, während des Formens der Celluloseprodukte (1) relativ zu dem ersten Formteilabschnitt (4a) in der lateralen Richtung (D_{LA}) hin zu dem zweiten Formteil (3b) von einer anfänglichen Position (P_{I}) zu einer Pressposition (P_{P}) hin verschoben zu werden.

4. Pressmodul (PM) nach Anspruch 3,
wobei der zweite Formteilabschnitt (4b) dazu konfiguriert ist, nach dem Formen der Celluloseprodukte (1) relativ zu dem ersten Formteilabschnitt (4a) in der lateralen Richtung (D_{LA}) weg von dem zweiten Formteil (3b) von der Pressposition (P_{P}) zurück zu der anfänglichen Position (P_{I}) hin verschoben zu werden.

5. Pressmodul (PM) nach einem der vorhergehenden Ansprüche,
wobei der zweite Formteilabschnitt (4b) eine Pressoberfläche (6) umfasst, die dazu konfiguriert ist, während des Formens der Celluloseprodukte (1) die luftgeformte Celluloserohlingsstruktur (2) in der lateralen Richtung (D_{LA}) zu dem zweiten Formteil (3b) hin zu pressen.

6. Pressmodul (PM) nach Anspruch 5,
wobei das zweite Formteil (3b) eine Formstruktur (7) umfasst, die dazu konfiguriert ist, mit der Pressoberfläche (6) zu interagieren, wobei die Pressoberfläche (6) dazu konfiguriert ist, während des Formens der Celluloseprodukte (1) die luftgeformte Celluloserohlingsstruktur (2) in der lateralen Richtung (D_{LA}) zu der Formstruktur (7) hin zu pressen.

7. Pressmodul (PM) nach Anspruch 6,
wobei die Formstruktur (7) als eine Vertiefung in dem zweiten Formteil (3b) angeordnet ist und wobei die Pressoberfläche (6) dazu konfiguriert ist, während des Formens der Celluloseprodukte (1) die luftgeformte Celluloserohlingsstruktur (2) in die Vertiefung zu pressen.

8. Pressmodul (PM) nach einem der vorhergehenden Ansprüche,
wobei der zweite Formteilabschnitt (4b) als zweite oder mehr elastische Verformungselemente angeordnet ist.

9. Verfahren zum Formen von Celluloseprodukten (1) aus einer luftgeformten Celluloserohlingsstruktur (2) in einem Pressmodul (PM), wobei das Pressmodul (PM) eine Formgebungsform (3) mit einem ersten Formteil (3a) und einem zweiten Formteil (3b) umfasst, die dazu konfiguriert sind, zum Formen der Celluloseprodukte (1) aus der luftgeformten Celluloserohlingsstruktur (2) in der Formgebungsform (3) miteinander zu interagieren, wobei das erste Formteil (3a) und/oder das zweite Formteil (3b) in einer Pressrichtung (D_{P}) parallel zu einer Längsrichtung (D_{LO}) des Pressmoduls (PM) relativ zueinander bewegbar angeordnet sind, wobei das erste Formteil (3a) einen ersten Formteilabschnitt (4a), einen zweiten Formteilabschnitt (4b), der in Verbindung mit dem ersten Formteilabschnitt (4a) angeordnet ist, und eine Basisstruktur (5), die in Verbindung mit dem ersten Formteilabschnitt (4a) und dem zweiten Formteilabschnitt (4b) angeordnet ist, umfasst, wobei der erste Formteilabschnitt (4a) und die Basisstruktur (5) in der Längsrichtung (D_{LO}) relativ zueinander bewegbar angeordnet sind, wobei der zweite Formteilabschnitt (4b) ein elastisches Verformungselement ist, wobei das Verfahren in einem einzelnen Pressvorgang (O_{SP}) die folgenden Schritte umfasst:
Bereitstellen der luftgeformten Celluloserohlingsstruktur (2) und Anordnen der luftgeformten Celluloserohlingsstruktur (2) zwischen dem ersten Formteil (3a) und dem zweiten Formteil (3b);
Verschieben des ersten Formteils (3a) und/oder des zweiten Formteils (3b) in einer mindestens teilweise überlappenden Beziehung in der Längsrichtung (D_{LO}), wobei der erste Formteilabschnitt (4a) und der zweite Formteilabschnitt (4b) in der überlappenden Beziehung mindestens teilweise in einem in Längsrichtung überlappenden Abschnitt (S_{OL}) zwischen dem ersten Formteil (3a) und dem zweiten Formteil (3b) positioniert sind;
Verschieben des ersten Formteilabschnitts (4a) und der Basisstruktur (5) relativ zueinander in der Längsrichtung (D_{LO}) und Verschieben des zweiten Formteilabschnitts (4b) relativ zu dem ersten Formteilabschnitt (4a) in der lateralen Richtung (D_{LA}) des Pressmoduls (PM) durch Deformation des zweiten Formteilabschnitts (4b) bei Bewegung des ersten Formteilabschnitts (4a) und der Basisstruktur (5) relativ zueinander und
Anwenden eines Formdrucks (P_{F}) durch den ersten Formteilabschnitt (4a) und den zweiten Formteilabschnitt (4b) auf die luftgeformte Celluloserohlingsstruktur (2) in dem Bereich von 1-100 Mpa, bevorzugt in dem Bereich von 4-20 Mpa, zum Formen der Celluloseprodukte (1) in der Formgebungsform (3).

10. Verfahren nach Anspruch 9,
wobei das Verfahren ferner den folgenden Schritt umfasst: Anwenden einer Formtemperatur (T_{F}) auf die luftgeformte Celluloserohlingsstruktur (2), wenn das erste Formteil (3a) und das zweite Formteil (3b) in der mindestens teilweise überlappenden Beziehung in der Längsrichtung (D_{LO}) verschoben werden, wobei die Formtemperatur (T_{F}) in dem Bereich von 100-300 °C, bevorzugt in dem Bereich von 100-200 °C, liegt.

11. Verfahren nach Anspruch 10,
wobei das Verfahren ferner den folgenden Schritt umfasst: Herstellen des Formdrucks (P_{F}) auf die luftgeformte Celluloserohlingsstruktur (2) zwischen dem ersten Formteilabschnitt (4a) und dem zweiten Formteil (3b) und zwischen dem zweiten Formteilabschnitt (4b) und dem zweiten Formteil (3b).

12. Verfahren nach einem der Ansprüche 9 bis 11,
wobei das Verfahren ferner den folgenden Schritt umfasst: Verschieben, während des Formens der Celluloseprodukte (1), des zweiten Formteilabschnitts (4b) relativ zu dem ersten Formteilabschnitt (4a) in der lateralen Richtung (D_{LA}) hin zu dem zweiten Formteil (3b) von einer anfänglichen Position (P_{I}) zu einer Pressposition (P_{P}) hin.

13. Verfahren nach Anspruch 12,
wobei das Verfahren ferner den folgenden Schritt umfasst: Verschieben des zweiten Formteilabschnitts (4b) relativ zu dem ersten Formteilabschnitt (4a) in der lateralen Richtung (D_{LA}) weg von dem zweiten Formteil (3b) von der Pressposition (P_{P}) zurück zu der anfänglichen Position (P_{I}) nach dem Formen der Celluloseprodukte (1).

14. Verfahren nach einem der Ansprüche 9 bis 13,
wobei der zweite Formteilabschnitt (4b) eine Pressoberfläche (6) umfasst, wobei das Verfahren ferner den folgenden Schritt umfasst: Pressen, während des Formens der Celluloseprodukte (1), der luftgeformten Celluloserohlingsstruktur (2) durch die Pressoberfläche (6) in die laterale Richtung (D_{LA}) zu dem zweiten Formteil (3b) hin.

15. Verfahren nach Anspruch 14,
wobei das zweite Formteil (3b) eine Formstruktur (7) umfasst, die dazu konfiguriert ist, mit der Pressoberfläche (6) zu interagieren, wobei das Verfahren ferner den folgenden Schritt umfasst: Pressen, während des Formens der Celluloseprodukte (1), der luftgeformten Celluloserohlingsstruktur (2) durch die Pressoberfläche (6) in die laterale Richtung (D_{LA}) zu der Formstruktur (7) hin.

16. Verfahren nach Anspruch 15,
wobei die Formstruktur (7) als eine Vertiefung in dem zweiten Formteil (3b) angeordnet ist, wobei das Verfahren ferner den folgenden Schritt umfasst: Pressen, während des Formens der Celluloseprodukte (1), der luftgeformten Celluloserohlingsstruktur (2) durch die Pressoberfläche (6) in die Vertiefung.

17. Verfahren nach einem der Ansprüche 9 bis 16,
wobei der zweite Formteilabschnitt (4b) als zwei oder mehr elastische Verformungselemente angeordnet ist, wobei das Verfahren ferner den folgenden Schritt umfasst: Verschieben der zwei oder mehr elastischen Verformungselemente relativ zu dem ersten Formteilabschnitt (4a) in der lateralen Richtung (D_{LA}).

## Revendications

1. Module de pressage (PM) pour former des produits cellulosiques (1) à partir d'une structure d'ébauche cellulosique formée à l'air (2), dans lequel le module de pressage (PM) comprend un moule de formage (3) doté d'une première partie de moule (3a) et d'une seconde partie de moule (3b) conçues pour interagir afin de former les produits cellulosiques (1) à partir de la structure d'ébauche cellulosique formée à l'air (2) dans le moule de formage (3), dans lequel la première partie de moule (3a) et/ou la seconde partie de moule (3b) sont mobiles l'une par rapport à l'autre dans une direction de pressage (D_{P}) parallèle à la direction longitudinale (D_{LO}) du module de pressage (PM), dans lequel la première partie de moule (3a) et la seconde partie de moule (3b) sont au moins partiellement conçues pour se chevaucher dans la direction longitudinale (D_{LO}) lors du formage des produits cellulosiques (1),
dans lequel la première partie de moule (3a) comprend une première section de partie de moule (4a), une seconde section de partie de moule (4b) disposée en liaison avec la première section de partie de moule (4a), et une structure de base (5) disposée en liaison avec la première section de partie de moule (4a) et la seconde section de partie de moule (4b), dans lequel la première section de partie de moule (4a) et la structure de base (5) sont disposées de manière mobile dans la direction longitudinale (D_{LO}) l'une par rapport à l'autre, dans lequel lors du déplacement de la première section de partie de moule (4a) et de la structure de base (5) l'une par rapport à l'autre, la seconde section de partie de moule (4b) est configurée pour être déplacée par rapport à la première section de partie de moule (4a) et à la structure de base (5) dans la direction latérale (D_{LA}) du module de pressage (PM) pendant le formage des produits cellulosiques (1) dans le moule de formage (3),
**caractérisé en ce que** la seconde section de partie de moule (4b) est un élément de déformation élastique
dans lequel la première section de partie de moule (4a) et la seconde section de partie de moule (4b) sont configurées pour appliquer une pression de formage (P_{F}) sur la structure d'ébauche cellulosique formée par air (2) dans la plage de 1 à 100 MPa, de préférence dans la plage de 4 à 20 MPa, pendant une seule opération de pressage (O_{SP}) lors du formage des produits cellulosiques (1) dans le moule de formage (3).

2. Module de pressage (PM) selon la revendication 1,
dans lequel la première section de partie de moule (4a) et la seconde section de partie de moule (4b) dans la relation de chevauchement sont au moins partiellement configurées pour être positionnées dans une section de chevauchement longitudinal (S_{OL}) entre la première partie de moule (3a) et la seconde partie de moule (3b).

3. Module de pressage (PM) selon la revendication 1 ou 2,
dans lequel la seconde section de partie de moule (4b) est configurée pour être déplacée par rapport à la première section de partie de moule (4a) dans la direction latérale (D_{LA}) vers la seconde partie de moule (3b) d'une position initiale (P_{I}) à une position de pressage (P_{P}) pendant le formage des produits cellulosiques (1).

4. Module de pressage (PM) selon la revendication 3,
dans lequel la seconde section de partie de moule (4b) est configurée pour être déplacée par rapport à la première section de partie de moule (4a) dans la direction latérale (D_{LA}) à l'écart de la seconde partie de moule (3b) de la position de pressage (P_{P}) vers la position initiale (P_{I}) après le formage des produits cellulosiques (1).

5. Module de pressage (PM) selon l'une quelconque des revendications précédentes,
dans lequel la seconde section de partie de moule (4b) comprend une surface de pressage (6) configurée pour presser la structure d'ébauche cellulosique formée à l'air (2) dans la direction latérale (D_{LA}) vers la seconde partie de moule (3b) pendant le formage des produits cellulosiques (1).

6. Module de pressage (PM) selon la revendication 5,
dans lequel la seconde partie de moule (3b) comprend une structure de formage (7) configurée pour interagir avec la surface de pressage (6), dans lequel la surface de pressage (6) est configurée pour presser la structure d'ébauche cellulosique formée à l'air (2) dans la direction latérale (D_{LA}) vers la structure de formage (7) pendant le formage des produits cellulosiques (1).

7. Module de pressage (PM) selon la revendication 6,
dans lequel la structure de formage (7) est agencée comme un évidement dans la seconde partie de moule (3b) et dans lequel la surface de pressage (6) est configurée pour presser la structure d'ébauche cellulosique formée à l'air (2) dans l'évidement pendant le formage des produits cellulosiques (1).

8. Module de pressage (PM) selon l'une quelconque des revendications précédentes,
dans lequel la seconde section de partie de moule (4b) est agencée sous la forme de deux ou plusieurs éléments de déformation élastique.

9. Procédé de formage de produits cellulosiques (1) à partir d'une structure d'ébauche cellulosique formée à l'air (2) dans un module de pressage (PM), dans lequel le module de pressage (PM) comprend un moule de formage (3) doté d'une première partie de moule (3a) et d'une seconde partie de moule (3b) conçues pour interagir afin de former les produits cellulosiques (1) à partir de la structure d'ébauche cellulosique formée à l'air (2) dans le moule de formage (3), dans lequel la première partie de moule (3a) et/ou la seconde partie de moule (3b) sont mobiles l'une par rapport à l'autre dans une direction de pressage (D_{P}) parallèle à la direction longitudinale (D_{LO}) du module de pressage (PM), dans lequel la première partie (3a) comprend une première section de partie de moule (4a), une seconde section de partie de moule (4b) reliée à la première section de partie de moule (4a) et une structure de base (5) reliée à la première section de partie de moule (4a) et à la seconde section de partie de moule (4b), dans lequel la première section de partie de moule (4a) et la structure de base (5) sont mobiles dans la direction longitudinale (D_{LO}) l'une par rapport à l'autre, dans lequel la seconde section de partie de moule (4b) est un élément de déformation élastique, dans lequel le procédé en une seule opération de pressage (O_{SP}) comprend les étapes suivantes :
la fourniture de la structure d'ébauche cellulosique formée à l'air (2) et l'agencement de la structure d'ébauche cellulosique formée à l'air (2) entre la première partie de moule (3a) et la seconde partie de moule (3b) ;
le déplacement de la première partie de moule (3a) et/ou de la seconde partie de moule (3b) dans une relation de chevauchement au moins partiel dans la direction longitudinale (D_{LO}), dans lequel, dans la relation de chevauchement, la première section de partie de moule (4a) et la seconde section de partie de moule (4b) sont au moins partiellement positionnées dans une section de chevauchement longitudinal (S_{OL}) entre la première partie de moule (3a) et la seconde partie de moule (3b) ;
le déplacement de la première section de partie de moule (4a) et de la structure de base (5) l'une par rapport à l'autre dans la direction longitudinale (D_{LO}), et le déplacement de la seconde section de partie de moule (4b) par rapport à la première section de partie de moule (4a) dans la direction latérale (D_{LA}) du module de pressage (PM) par déformation de la seconde section de partie de moule (4b) lors du mouvement de la première section de partie de moule (4a) et de la structure de base (5) l'une par rapport à l'autre, et
l'application d'une pression de formage (P_{F}) par la première section de partie de moule (4a) et la seconde section de partie de moule (4b) sur la structure d'ébauche cellulosique formée à l'air (2) dans la plage de 1 à 100 Mpa, de préférence dans la plage de 4 à 20 Mpa, pour former les produits cellulosique (1) dans le moule de formage (3).

10. Procédé selon la revendication 9,
dans lequel le procédé comprend en outre l'étape consistant à : appliquer une température de formage (T_{F}) sur la structure d'ébauche cellulosique formée à l'air (2) lorsque la première partie de moule (3a) et la seconde partie de moule (3b) sont déplacées dans la relation de chevauchement au moins partiel dans la direction longitudinale (D_{LO}), dans lequel la température de formage (T_{F}) est dans la plage de 100 à 300 °C, de préférence dans la plage de 100 à 200 °C.

11. Procédé selon la revendication 10,
dans lequel le procédé comprend en outre l'étape consistant à : établir la pression de formage (P_{F}) sur la structure d'ébauche cellulosique formée à l'air (2) entre la première section de partie de moule (4a) et la seconde partie de moule (3b) et entre la seconde section de partie de moule (4b) et la seconde partie de moule (3b).

12. Procédé selon l'une quelconque des revendications 9 à 11,
dans lequel le procédé comprend en outre l'étape consistant à : déplacer la seconde section de partie de moule (4b) par rapport à la première section de partie de moule (4a) dans la direction latérale (D_{LA}) vers la seconde partie de moule (3b) d'une position initiale (P_{I}) à une position de pressage (P_{P}) pendant le formage des produits cellulosiques (1).

13. Procédé selon la revendication 12,
dans lequel le procédé comprend en outre l'étape consistant à : déplacer la seconde section de partie de moule (4b) par rapport à la première section de partie de moule (4a) dans la direction latérale (D_{LA}) à l'écart de la seconde partie de moule (3b) de la position de pressage (P_{P}) vers la position initiale (P_{I}) après le formage des produits cellulosiques (1).

14. Procédé selon l'une quelconque des revendications 9 à 13,
dans lequel la seconde section de partie de moule (4b) comprend une surface de pressage (6), dans lequel le procédé comprend en outre l'étape consistant à : presser la structure d'ébauche cellulosique formée à l'air (2) par la surface de pressage (6) dans la direction latérale (D_{LA}) vers la seconde partie de moule (3b) pendant le formage des produits cellulosiques (1).

15. Procédé selon la revendication 14,
dans lequel la seconde partie de moule (3b) comprend une structure de formage (7) configurée pour interagir avec la surface de pressage (6), dans lequel le procédé comprend en outre l'étape consistant à : presser la structure d'ébauche cellulosique formée à l'air (2) par la surface de pressage (6) dans la direction latérale (D_{LA}) vers la structure de formage (7) pendant le formage des produits cellulosiques (1).

16. Procédé selon la revendication 15,
dans lequel la structure de formage (7) est agencée comme un évidement dans la seconde partie de moule (3b), dans lequel le procédé comprend en outre l'étape consistant à : presser la structure d'ébauche cellulosique formée à l'air (2) par la surface de pressage (6) dans l'évidement pendant le formage des produits cellulosique (1).

17. Procédé selon l'une quelconque des revendications 9 à 16,
dans lequel la seconde section de partie de moule (4b) est agencée sous la forme de deux ou plusieurs éléments de déformation élastique, dans lequel le procédé comprend en outre l'étape consistant à : déplacer les deux ou plusieurs éléments de déformation élastique par rapport à la première section de partie de moule (4a) dans la direction latérale (D_{LA}).
